(19) Europäisches Patentamt
European Patent Office
Office européen des brevets

(11) **EP 3 751 474 A1**

(12) **EUROPEAN PATENT APPLICATION**
published in accordance with Art. 153(4) EPC

(43) Date of publication:
**16.12.2020 Bulletin 2020/51**

(21) Application number: **19751628.9**

(22) Date of filing: **22.01.2019**

(51) Int Cl.:
**G06N 20/00** (2019.01)     **G06N 3/08** (2006.01)
**G06T 7/00** (2017.01)      **G06T 7/20** (2017.01)
**G08G 1/16** (2006.01)

(86) International application number:
**PCT/JP2019/001919**

(87) International publication number:
**WO 2019/155873 (15.08.2019 Gazette 2019/33)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **06.02.2018  JP 2018018886**

(71) Applicant: **Omron Corporation
Kyoto-shi, Kyoto 600-8530 (JP)**

(72) Inventors:
• **HYUGA, Tadashi
Kizugawa-shi, Kyoto 619-0283 (JP)**
• **IJIRI, Yoshihisa
Kizugawa-shi, Kyoto 619-0283 (JP)**

(74) Representative: **Becker, Eberhard
Becker & Kurig Partnerschaft
Patentanwälte PartmbB
Bavariastrasse 7
80336 München (DE)**

(54) **EVALUATION DEVICE, ACTION CONTROL DEVICE, EVALUATION METHOD, AND EVALUATION PROGRAM**

(57)     Provided is a technique with which it is possible to appropriately evaluate the validity of an inference result obtained by a learning-finish learner, without reducing the precision of the inference performed by the learning-finish learner. An evaluation device according to one aspect of the present invention includes: a data acquisition unit which acquires input data input to a first learner of finishing learning that has undergone supervised learning using a data set including a pair of training data and correct answer data that indicates the correct answer of an inference result to the training data; and a validity evaluation unit which evaluates, based on an output obtained from a second learner of finishing learning that has undergone unsupervised learning using the training data by inputting the input data to the second learner, whether the valid output is able to be obtained from the first learner as the inference result to the input data when the input data is input to the first learner.

FIG. 1

**Description**

BACKGROUND

Technical Field

The present invention relates to an evaluation device, an action control device, an evaluation method, and an evaluation program.

Related Art

Recently, machine learning has been used in various fields such as image recognition, voice recognition, and language analysis. Machine learning refers to a technique for finding a pattern hidden in given data (training data) by a computer, and a learning-finish learner obtained by performing the machine learning can acquire the ability to perform a predetermined inference on unknown input data. The inference result is used for the above image recognition, voice recognition, language analysis, and the like.

However, it is difficult to assume all types of input data given after machine learning and prepare training data. For example, when machine learning is used in the field of image recognition, it is difficult to assume all events that are targets of the image recognition and prepare image data. When input data of a type different from the training data prepared during machine learning is given, the validity of the inference to the input data performed by the learning-finish learner may be impaired, that is, an incorrect inference may be performed.

Therefore, in patent literature 1, a technique is proposed in which a neural network different from a problem solving neural network that performs a predetermined inference on input data is used to evaluate the reliability of output of the problem solving neural network. Specifically, unlearned data different from the learning data used for the learning of the problem solving neural network is used to perform machine learning of an unlearned case discrimination neural network. Thereby, the unlearned case discrimination neural network can acquire the ability to discriminate whether the input data is similar to the unlearned data.

In this technique, the reliability of the output of the problem solving neural network is evaluated by the unlearned case discrimination neural network constructed in this way. That is, when an inference is performed, input data input to the problem solving neural network is also input to the unlearned case discrimination neural network. Then, determination is made on whether the input data is similar to the unlearned data based on the output obtained from the unlearned case discrimination neural network. Thereby, determination is made on whether the input data is a type different from the learning data used for the learning of the problem solving neural network, and evaluation is made on the reliability of the output (that is, the inference result) obtained from the problem solving neural network when the input data is input.

[Literature of related art]

[Patent literature]

Patent literature 1: Japanese Patent Application Laid-Open No. 05-225163

SUMMARY

[Problems to be Solved]

The inventors have found the following problems for the technique proposed in patent literature 1 described above. That is, in machine learning, basically, the greater the number of the training data used for learning, the higher the precision of the inference performed by the learning-finish learner. However, in the technique proposed in patent literature 1, the training data prepared for machine learning is divided into the learning data used for the learning of the problem solving neural network and the unlearned data used for the learning of the unlearned case discrimination neural network. In other words, because all the prepared training data cannot be used for the learning of the problem solving neural network, the precision of the inference performed by the learning-finish problem solving neural network may be reduced.

In addition, as described above, it is difficult to assume all events that are targets of the inference and prepare the training data. Therefore, it is difficult to assume all types of input data input to the problem solving neural network and prepare the unlearned data used for the learning of the unlearned case discrimination neural network. In other words, it is not possible to eliminate the fundamental cause that input data of a type different from the training data prepared during machine learning may be given. Accordingly, in the technique proposed in patent literature 1, it is difficult to construct an unlearned case discrimination neural network capable of appropriately evaluating the reliability of the inference result obtained by the problem solving neural network.

The present invention has been made in view of this situation in one aspect, and an objective thereof is to provide a technique with which it is possible to appropriately evaluate the validity of an inference result obtained by a learning-finish learner, without reducing the precision of the inference performed by the learning-finish learner.

[Means to Solve Problems]

The present invention employs the following configurations in order to solve the problems described above.

That is, an evaluation device according to one aspect of the present invention includes: a data acquisition unit which acquires input data input to a learning-finish first learner having undergone supervised learning using a data set including a pair of training data and correct answer data that indicates the correct answer of an inference result to the training data; and a validity evaluation unit which evaluates, based on output obtained from a learning-finish second learner by inputting the input data to the second learner, whether a valid output is able to be obtained from the first learner as an inference result to the input data when the input data is input to the first learner, the learning-finish second learner having undergone unsupervised learning using the training data.

In the evaluation device having the above configuration, two learning-finish learners are prepared. First, the learning-finish first learner is constructed by using a data set including a pair of training data and correct answer data to perform supervised learning. The training data is data to be inferred, and the correct answer data is data indicating the correct answer of an inference result to the training data. The supervised learning is a machine learning technique in which a learner is trained to output an output value corresponding to correct answer data when training data is input. Therefore, the learning-finish first learner is constructed to have the ability to perform a predetermined inference by the supervised learning.

On the other hand, the learning-finish second learner is constructed by using the training data used for the machine learning of the first learner to perform unsupervised learning. Different from the supervised learning, the unsupervised learning is a machine learning technique that derives statistical characteristics such as the structure, the law, the tendency, and the classification of training data without using correct answer data, and is a machine learning technique in which a learner is trained to output an output value corresponding to an identification result of the statistical characteristics of training data when the training data is input. The learning-finish second learner is constructed to have the ability to identify whether the target data is similar to the training data by the unsupervised learning.

Then, in the evaluation device having the above configuration, the learning-finish second learner is used to evaluate the validity of the inference result obtained by the learning-finish first learner. That is, the evaluation device having the above configuration acquires the input data input to the learning-finish first learner, and inputs the acquired input data to the learning-finish second learner. As described above, the learning-finish second learner acquires the ability to identify whether the input data is similar to the training data by the unsupervised learning. Therefore, the evaluation device having the above configuration can identify, based on output obtained from the second learner by inputting input data to the second learner, whether the input data is similar to the training data used for the machine learning of the first learner. Using this ability, the evaluation device having the above configuration evaluates whether valid output is able to be obtained from the first learner as an inference result to the input data when the input data is input to the first learner.

Consequently, according to the above configuration, the training data prepared for machine learning can be commonly used for both the learning of the first learner and the learning of the second learner, and thus the training data may not be divided into data used for the learning of the first learner and data used for the learning of the second learner. Therefore, it is possible to prevent the number of the training data used for the machine learning of the first learner from becoming excessively small. In addition, according to the above configuration, by utilizing the characteristics of the unsupervised learning, it is possible to eliminate the fundamental cause that input data of a type different from the training data prepared during machine learning may be given. That is, the learning-finish second learner is configured to be capable of evaluating, based on the statistical characteristics derived from the training data used for the learning of the first learner, whether the given input data is a type different from the training data. Therefore, it is not necessary to assume all types of input data input to the first learner and prepare the training data for the purpose of the learning of the second learner. Thus, according to the above configuration, it is possible to appropriately evaluate the validity of the inference result obtained by the learning-finish first learner without reducing the precision of the inference performed by the learning-finish first learner.

Besides, the "training data" may be referred to as "learning data". The "correct answer data" may be referred to as a "label" or "teacher data". The "data set" may be referred to as a "training data set" or a "learning data set". The "learning-finish learner" may be referred to as an "identifier" or a "classifier".

In addition, the "learner" may be configured by a learning model capable of acquiring the ability to identify a predetermined pattern by machine learning. The first learner may be configured by a learning model that can be used for supervised learning. For example, the first learner may be configured by a neural network, a linear regression model, a support vector machine or the like. On the other hand, the second learner may be configured by a learning model that can be used for unsupervised learning. For example, the second learner may be configured by an autoencoder, a calculation model for calculating a Mahalanobis distance, a one-class support vector machine (one-class SVM) or the like.

Furthermore, the type of the inference performed by the first learner may be appropriately selected according to the embodiment. For example, the type of the inference performed by the first learner may be image recognition, voice recognition, language analysis, or the like. The types of the training data, the correct answer data, and the input data may be appropriately selected according to the type of the inference. For example, the training data and the input data may be image data, voice data, text data, numerical data or the like, or may be a combination of these data. In addition, for example, the correct answer data may be data indicating a result of image recognition for image data, data indicating a result of voice recognition for voice data, data indicating a result of language analysis for text data, data indicating a predetermined determination result for numerical data, or the like.

In the evaluation device according to the above aspect, the validity evaluation unit may compare output obtained from the second learner with a predetermined threshold value, and thereby determines whether valid output is able to be obtained from the first learner when the input data is input to the first learner. According to the configuration, it is possible to appropriately evaluate the validity of the inference result obtained by the first learner with respect to the input data.

In the evaluation device according to the above aspect, the validity evaluation unit may output, as a result of the evaluation, an evaluation value indicating a degree at which valid output is able to be obtained from the first learner as an inference result to the input data when the input data is input to the first learner. According to this configuration, it is possible to appropriately evaluate the validity of the inference result obtained by the first learner with respect to the input data based on the output evaluation value.

The evaluation device according to the above aspect may further include a warning unit which issues, when the validity evaluation unit evaluates that valid output is not able to be obtained from the first learner as an inference result to the input data when the input data is input to the first learner, a warning regarding the output that is obtained from the first learner as the inference result to the input data by inputting the input data to the first learner. According to this configuration, it is possible to warn a user and the like that the validity of the inference result obtained by the first learner with respect to the input data is low.

The evaluation device according to the above aspect may further include an inference unit which performs a predetermined inference on the input data by inputting the input data to the first learner and obtaining the output from the first learner. According to this configuration, it is possible to provide an evaluation device capable of performing a predetermined inference on input data and evaluating the validity of the result of the inference.

The evaluation device according to the above aspect may further include an action execution unit. When the validity evaluation unit evaluates that valid output is able to be obtained from the first learner as an inference result to the input data when the input data is input to the first learner, the action execution unit executes a predetermined action based on the inference result; when the validity evaluation unit evaluates that valid output is not obtained from the first learner as an inference result to the input data when the input data is input to the first learner, the action execution unit stops the execution of the predetermined action based on the inference result. In the configuration, when it is evaluated that the inference result obtained by the first learner with respect to the input data is valid, the predetermined action is executed based on the inference result, whereas when it is evaluated that the inference result is invalid, the execution of the predetermined action based on the inference result is stopped. Thereby, according to the configuration, the reliability of the action control based on the inference result obtained by the first learner can be improved. Besides, "stopping the execution of the predetermined action" may include all forms in which the execution of the predetermined action is not maintained. That is, "stopping the execution of the predetermined action" may include completely stopping the predetermined action, and changing attributes of the predetermined action such as speed, acceleration, and force.

In the evaluation device according to the above aspect, the input data may include image data that can be captured of a driver sitting in a driver seat of a vehicle, and the output obtained from the first learner by inputting the input data to the first learner may include information indicating the state of the driver. According to this configuration, it is possible to provide an evaluation device that evaluates the validity of the inference determining the state of the driver based on the input data including image data.

The evaluation device according to the above aspect may further include a data transmission unit which transmits, when the validity evaluation unit evaluates that valid output is able to be not obtained from the first learner as an inference result to the input data when the input data is input to the first learner, the input data to a predetermined storage location. When the inference result obtained by the first learner is evaluated as low, the given input data is assumed to be a type different from the training data used for the machine learning of the first learner. According to this configuration, the input data can be collected in a predetermined storage location. Thereby, the collected input data can be used as new training data, and the range of targets that can be inferred by the first learner can be expanded.

In the evaluation device according to the above aspect, the first learner may be configured by a first encoder that encodes the input data, and the second learner may be configured by a second encoder that encodes the input data and a decoder that decodes the output of the second encoder. Each encoder and decoder may be constructed by a neural network for example. An autoencoder may be used as the second learner including an encoder and a decoder. The decoder is constructed to decode the output of the second encoder, that is, to recover the input data input to the second encoder. Therefore, the more the output obtained from the decoder is similar to the input data input to the second encoder, the more the input data can be identified as being similar to the training data. Conversely, the more the output obtained from the decoder is not similar to the input data input to the second encoder, the more the input data can be identified as not being similar to the training data. Consequently, according to the configuration, it is possible to appropriately evaluate the validity of the inference result obtained by the first learner.

In the evaluation device according to the above aspect, the first encoder and the second encoder may be the same. According to the configuration, by sharing the encoder between the first learner and the second learner, it is possible to suppress the total computational cost of the first learner and the second learner, and to increase the calculation speed of the second learner.

In the evaluation device according to the above aspect, the first encoder may be constructed to output, when the training data is input, a value corresponding to the correct answer data paired with the input training data; the second encoder may be the same as the first encoder or a copy of the first encoder; and the decoder may be constructed to output, when the output of the first encoder is input, a value corresponding to the training data input to the first encoder so as to obtain the output that is input. According to the configuration, by sharing the encoder between the first learner and the second learner, it is possible to suppress the total computational cost of the first learner and the second learner, and to increase the calculation speed of the second learner.

Besides, the action control device may be constructed by combining the action execution unit with the evaluation device according to each of the above forms. For example, an action control device according to one aspect of the present invention includes: a data acquisition unit which acquires input data input to a learning-finish first learner having undergone supervised learning using a data set including a pair of training data and correct answer data that indicates the correct answer of an inference result to the training data; a validity evaluation unit which evaluates, based on output obtained from a learning-finish second learner by inputting the input data to the second learner, whether valid output is able to be obtained from the first learner as an inference result to the input data when the input data is input to the first learner, the learning-finish second learner having undergone unsupervised learning using the training data; and an action execution unit, wherein, when the validity evaluation unit evaluates that valid output is able to be obtained from the first learner as an inference result to the input data when the input data is input to the first learner, the action execution unit controls execution of a predetermined action based on the result of a predetermined inference performed on the input data by inputting the input data to the first learner and obtaining output from the first learner; when the validity evaluation unit evaluates that valid output is not able to be obtained from the first learner as an inference result to the input data when the input data is input to the first learner, the action execution unit stops the execution of the predetermined action based on the result of the inference. Besides, the device that executes the predetermined action may be the action control device, or may be a separate device different from the action control device. When a separate device executes the predetermined action, the action control device controls the execution of the predetermined action by transmitting the command to the separate device.

In addition, another aspect of the evaluation device or the action control device according to each of the above forms may be: an information processing method that implements each of the above configurations; a program; or a storage medium that stores the program and is readable by a device, machine and the like in addition to a computer. Here, the storage medium readable by a computer and the like refers to a medium that stores information such as programs by electrical, magnetic, optical, mechanical, or chemical action.

For example, an evaluation method according to one aspect of the present invention is an information processing method in which a computer executes: a step for acquiring input data input to a learning-finish first learner having undergone supervised learning using a data set including a pair of training data and correct answer data that indicates the correct answer of an inference result to the training data; and a step for evaluating, based on output obtained from a learning-finish second learner by inputting the input data to the second learner, whether valid output is able to be obtained from the first learner as an inference result to the input data when the input data is input to the first learner, the learning-finish second learner having undergone unsupervised learning using the training data.

In addition, for example, an evaluation program according to one aspect of the present invention is a program for causing a computer to execute:

a step for acquiring input data input to a learning-finish first learner having undergone supervised learning using a data set including a pair of training data and correct answer data that indicates the correct answer of an inference result to the training data; and a step evaluating, based on output obtained from a learning-finish second learner by inputting the input data to the second learner, whether valid output is able to be obtained from the first learner as an inference result to the input data when the input data is input to the first learner, the learning-finish second learner having undergone unsupervised learning using the training data.

[Effect]

According to the present invention, it is possible to provide a technique capable of appropriately evaluating the validity of an inference result obtained by a learning-finish learner without reducing the precision of the inference performed by the learning-finish learner.

BRIEF DESCRIPTION OF THE DRAWINGS

FIG. 1 schematically illustrates an example of the basic configuration of the present invention.

FIG. 2 schematically illustrates an example of a scene in which the present invention is applied.

FIG. 3 schematically illustrates an example of the hardware configuration of a vehicle driving support device according to an embodiment.

FIG. 4 schematically illustrates an example of the hardware configuration of a learning device according to the embodiment.

FIG. 5 schematically illustrates an example of the software configuration of the vehicle driving support device according to the embodiment.

FIG. 6A schematically illustrates an example of gaze state information according to the embodiment.

FIG. 6B schematically illustrates an example of responsiveness information according to the embodiment.

FIG. 7A schematically illustrates an example of the configuration of a neural network according to the embodiment.

FIG. 7B schematically illustrates an example of the configuration of a decoder of an autoencoder according to the embodiment.

FIG. 8 schematically illustrates an example of the software configuration of the learning device according to the embodiment.

FIG. 9A schematically illustrates an example of a machine learning process of the neural network using the learning device according to the embodiment.

FIG. 9B schematically illustrates an example of a machine learning process of the decoder of the autoencoder using the learning device according to the embodiment.

FIG. 10A illustrates an example of a processing procedure of an automatic driving support device according to the embodiment.

FIG. 10B illustrates an example of the processing procedure of the automatic driving support device according to the embodiment.

FIG. 11 illustrates an example of a processing procedure of the learning device according to the embodiment.

FIG. 12 schematically illustrates an example of another scene in which the present invention is applied.

FIG. 13 schematically illustrates an example of the software configuration of a diagnostic device according to another embodiment.

FIG. 14 schematically illustrates an example of the software configuration of a learning device according to another embodiment.

FIG. 15 schematically illustrates an example of another scene in which the present invention is applied.

FIG. 16 schematically illustrates an example of the software configuration of a prediction device according to another embodiment.

FIG. 17 schematically illustrates an example of the software configuration of a learning device according to another embodiment.

FIG. 18 illustrates an example of a processing procedure of an automatic driving support device according to another embodiment.

DESCRIPTION OF THE EMBODIMENTS

Hereinafter, an embodiment according to one aspect of the present invention (hereinafter, also referred to as "the embodiment") is described with reference to the drawings. However, the embodiment described below is merely an illustration of the present invention in all respects. It is evident that various improvements or modifications can be made without departing from the scope of the present invention. In other words, in implementing the present invention, a specific configuration corresponding to the embodiment may be appropriately employed. Besides, data that appears in the embodiment is described in natural language; more specifically, the data is specified by a computer-recognizable pseudo language, command, parameter, machine language, or the like.

§ 1 Application Example

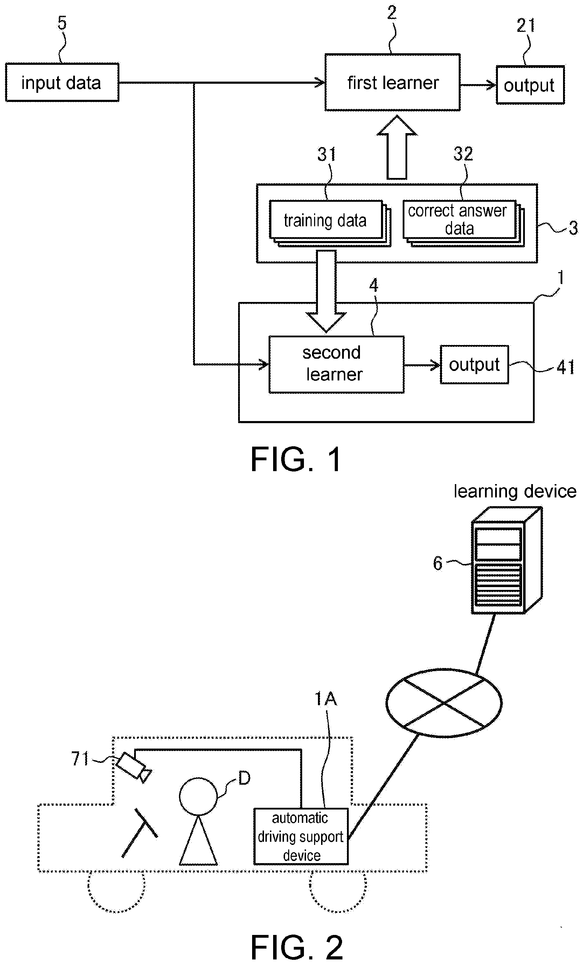

First, an example of the basic configuration of the present invention is described with reference to FIG. 1. In the embodiment, two learners (2, 4) of finishing learning (i.e., learning-finish learners) are prepared.

First, the learning-finish first learner 2 is constructed by using a training (learning) data set 3 including a pair of training data 31 and correct answer data 32 to perform supervised learning. The training data 31 is data to be inferred, and the correct answer data 32 is data indicating the correct answer of an inference result to the training data 31. For example, when an inference is performed for image recognition, the training data 31 is image data and the correct answer data 32 is the data indicating the correct answer to image recognition for the image data. The supervised learning is a machine learning technique in which a learner is trained so as to output an output value corresponding to correct answer data when training data is input. Therefore, the learning-finish first learner 2 is constructed to have the ability to perform a predetermined inference by the supervised learning. That is, when input data 5 is input to the learning-finish first learner 2, output 21 corresponding to the result of the predetermined inference with respect to the input data 5 can be obtained from the learning-finish first learner 2.

On the other hand, the learning-finish second learner 4 is constructed by using the training data 31 used for machine learning of the first learner 2 to perform unsupervised learning. Different from the supervised learning, the unsupervised learning is a machine learning technique that derives statistical characteristics such as the structure, law, tendency, and classification of training data without using correct answer data, and is a machine learning technique in which a learner is trained so as to output an output value corresponding to an identification result of statistical characteristics of the training data when the training data is input. Therefore, the learning-finish second learner 4 is constructed to have the ability to identify whether the target data is similar to the training data 31 by the unsupervised learning. The learning-finish second learner 4 may be constructed, for example, to restore the training data 31 by encoding the training data 31 and decoding the encoded result, or may be constructed to identify the training data 31 into a predetermined classification.

An evaluation device 1 uses the learning-finish second learner 4 to evaluate the validity of the inference result obtained by the learning-finish first learner 2. That is, the evaluation device 1 acquires the input data 5 input to the learning-finish first learner 2, and inputs the acquired input data 5 to the learning-finish second learner 4. As described above, the learning-finish second learner 4 acquires the ability to identify whether the input data 5 is similar to the training data 31 by the unsupervised learning. Therefore, when the input data 5 is input to the second learned device 4, output 41 related to the result of identifying whether the input data 5 is similar to the training data 31 can be obtained from the second learner 4. Therefore, the evaluation device 1 evaluates, based on the output 41 obtained from the second learner 4 by inputting the input data 5 to the second learner 4, whether valid output is able to be obtained from the first learner 2 as an inference result with respect to the input data 5 when the input data 5 is input to the first learner 2.

Consequently, according to the embodiment, the training data 31 prepared for machine learning can be commonly used for both the learning of the first learner 2 and the learning of the second learner 4, and thus the training data is not required to be divided into the data used for the learning of the first learner 2 and the data used for the learning of the second learner 4. Therefore, it is possible to prevent the number of the training data 31 used for the machine learning of the first learner 2 from becoming excessively small. In addition, according to the embodiment, the learning-finish second learner 4 is configured to be capable of evaluating, based on the statistical characteristics derived from the training data 31 used for the learning of the first learner 2, whether the given input data 5 is a type different from the training data 31. Therefore, it is not necessary to assume all types of the input data 5 input to the first learner 2 and prepare the training data 31 for the purpose of the learning of the second learner 4. Thus, according to the embodiment, it is possible to appropriately evaluate the validity of the inference result obtained by the learning-finish first learner 2 without reducing the precision of the inference performed by the learning-finish first learner 2.

Besides, in FIG. 1, the first learner 2 is held at the outside of the evaluation device 1 (for example, an external device accessible to the evaluation device 1 via the network), and the second learner 4 is held inside the evaluation device 1. However, the location wherein each learner (2, 4) is held is not limited to this example and may be appropriately selected according to the embodiment. For example, the first learner 2 may be held inside the evaluation device 1. In addition, for example, the second learner 4 may be held in an external device (for example, a server) accessible to the evaluation device 1 via the network.

In addition, each learner (2, 4) may be configured by a learning model capable of acquiring the ability to identify a predetermined pattern by machine learning. The first learner 2 may be configured by a learning model that can be used for supervised learning, or may be configured by, for example, a neural network, a linear regression model, a support vector machine or the like. On the other hand, the second learner 4 may be configured by a learning model that can be used for unsupervised learning, or may be configured by, for example, an autoencoder, a calculation model for calculating a Mahalanobis distance, a one-class support vector machine (one-class SVM) or the like. As each specific technique of the supervised learning and the unsupervised learning, a known technique may be appropriately selected according to the learning model used for each learner (2, 4).

Furthermore, the type of the inference performed by the first learner 2 may be appropriately selected according to the embodiment. For example, the type of the inference performed by the first learner 2 may be image recognition, voice recognition, language analysis, or the like. The types of the training data 31, the correct answer data 32, and the input data 5 may be appropriately selected according to the type of the inference. For example, the training data 31 and the input data 5 may be image data, voice data, text data, numerical data or the like, or may be a combination of these data. For example, the correct answer data 32 may be data indicating a result of image recognition for image data, data indicating a result of voice recognition for voice data, data indicating a result of language analysis for text data, data indicating a predetermined determination result for numerical data, or the like.

In addition, it is preferable that the training data used for the supervised learning of the first learner 2 and the training data used for the unsupervised learning of the second learner 4 are completely identical. However, the training data used for the supervised learning of the first learner 2 and the training data used for the unsupervised learning of the second learner 4 may not be completely identical as long as they overlap at least in part. In a case that the training data used for the supervised learning of the first learner 2 and the training data used for the unsupervised learning of the second learner 4 overlap at least in part but differ in other parts, the training data 31 used for the supervised learning of the first learner 2 is used to perform the unsupervised learning of the second learner 4.

Next, an example of a scene in which the present invention is applied is described with reference to FIG. 2. The evaluation device 1 can be applied in various fields in which supervised learning is used. FIG. 2 shows, as an example of the embodiment, an example in which the present invention is applied to an automatic driving support device 1A that supports automatic driving of an automobile. That is, the automatic driving support device 1A according to the embodiment is an example of the evaluation device 1 and also an example of the "action control device" of the present invention.

As shown in FIG. 2, the automatic driving support device 1A according to the embodiment is a computer that supports automatic driving of a vehicle while using a camera 71 to monitor a driver D. Specifically, the automatic driving support device 1A acquires a captured image from the camera 71 disposed to capture images of the driver D sitting in the driver seat of the vehicle. In addition, the automatic driving support device 1A acquires observation information (observation information 51 described later) of the driver D including facial behavior information regarding the facial behavior of the driver D.

Besides, the automatic driving support device 1A inputs the input data (input data 5A described later) including the captured image (low-resolution captured image 52 described later) and the observation information to the learning-finish first learner (neural network 2A described later), and thereby acquires driving state information indicating the driving state of the driver D from the first learner. Thereby, the automatic driving support device 1A uses the first learner to perform an inference for estimating the state of the driver D on the input data including the image data that can be captured (captured image) of the driver D sitting in the driver seat of the vehicle.

Furthermore, based on the output obtained from the second learner by inputting the input data to the learning-finish second learner (autoencoder 4A described later), the automatic driving support device 1A evaluates whether valid output is able to be obtained from the first learner as an inference result for the input data when the input data is input to the first learner. Thereby, the automatic driving support device 1A uses the second learner to evaluate the validity of the inference performed by the first learner on the input data.

On the other hand, a learning device 6 according to the embodiment is a computer which constructs each of the first learner and the second learner used in the automatic driving support device 1A, that is, a computer which performs machine learning of the supervised learning and the unsupervised learning. Specifically, the learning device 6 uses a data set (data set 3A described later) including a pair of training data (training data 31A described later) and correct answer data (correct answer data 32A described later) to perform the supervised learning of the first learner. In addition, the learning device 6 uses the training data (training data 31A described later) to perform the unsupervised learning of the second learner. Thereby, the learning device 6 generates the first learner and the second learner used in the automatic driving support device 1A. The automatic driving support device 1A can acquire the learning-finish first and second learners generated by the learning device 6 via a network for example. Besides, the type of the network may be appropriately selected from, for example, the Internet, a wireless communication network, a mobile communication network, a telephone network, a dedicated network and the like.

As described above, in an example of the embodiment, the learning-finish first learner is used to perform the inference for estimating the state of the driver D on the input data including the captured image and the observation information, and the learning-finish second learner is used to evaluate the validity of the inference performed by the first learner on the input data. Thereby, in the automatic driving support device 1A, when there is a high possibility that an inference result for estimating the state of the driver D has an error, a warning for informing that fact can be output or information processing such as action control using the inference result can be stopped. Therefore, it is possible to suppress the malfunction of the automatic driving support device 1A caused by the error in estimating the state of the driver D by the first learner.

§2 Configuration Example

[Hardware configuration]

<Automatic driving support device>

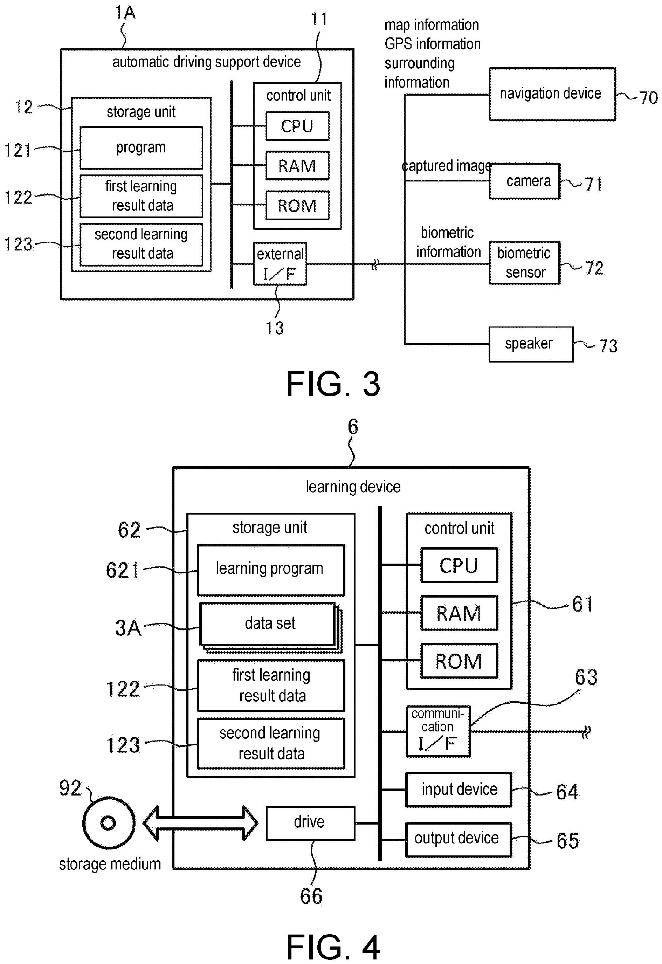

Next, an example of the hardware configuration of the automatic driving support device 1A according to the embodiment is described with reference to FIG. 3. FIG. 3 schematically illustrates an example of the hardware configuration of the automatic driving support device 1A according to the embodiment.

As shown in FIG. 3, the automatic driving support device 1A according to the embodiment is a computer in which a control unit 11, a storage unit 12, and an external interface 13 are electrically connected. Besides, in FIG. 3, the external interface is described as an external I/F.

The control unit 11 includes a CPU (Central Processing Unit) serving as a hardware processor, a RAM (Random Access Memory), a ROM (Read Only Memory) and the like, and performs control of each constituent element according to the information processing. The control unit 11 may be configured by, for example, an ECU (Electronic Control Unit). The storage unit 12 is configured by, for example, a RAM, a ROM and the like, and stores various information such as a program 121, first learning result data 122, and second learning result data 123. The storage unit 12 is an example of the "memory".

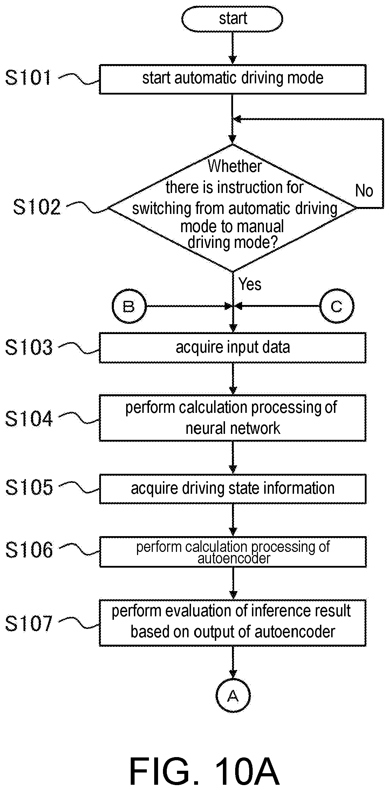

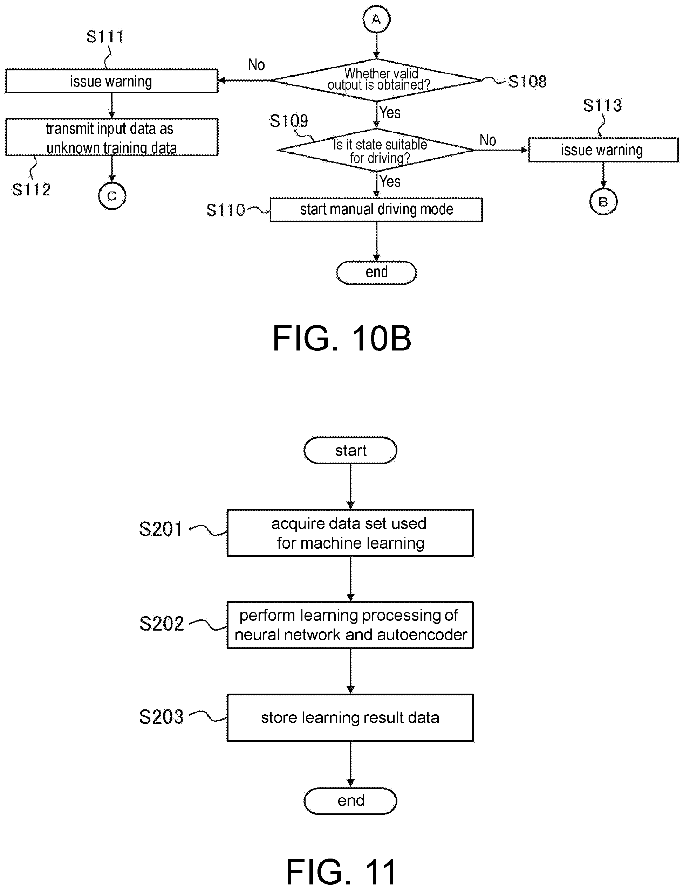

The program 121 is a program for causing the automatic driving support device 1A to execute information processing (FIGS. 10A and 10B) in which the first learner is used to perform the inference for estimating the state of the driver D and the second learner is used to evaluate the validity of the inference performed by the first learner. The program 121 is an example of the "evaluation program" in the present invention. The first learning result data 122 is data for setting the learning-finish first learner. The second learning result data 123 is data for setting the learning-finish second learner. Details are described later.

The external interface 13 is an interface for connection to an external device and is appropriately configured according to the external device to be connected. In the embodiment, the external interface 13 is connected to a navigation device 70, the camera 71, a biometric sensor 72, and a speaker 73 via a CAN (Controller Area Network) for example.

The navigation device 70 is a computer that provides route guidance when the vehicle is traveling. A known car navigation device may be used as the navigation device 70. The navigation device 70 is configured to measure the position of the host vehicle based on the GPS (Global Positioning System) signals and use map information and surrounding information regarding surrounding buildings to provide the route guidance. In addition, the information indicating the position of the host vehicle measured based on the GPS signals is referred to as "GPS information" below.

The camera 71 is disposed to capture images of the driver D sitting in the driver seat of the vehicle. For example, in the example of FIG. 2, the camera 71 is disposed above the front of the driver seat. However, the disposition location of the camera 71 is not limited to this example, and may be appropriately selected according to the embodiment as long as the images of the driver D sitting in the driver seat can be captured. Besides, a general digital camera, a video camera or the like may be used as the camera 71.

The biometric sensor 72 is configured to measure biometric information of the driver D. The biometric information to be measured is not particularly limited and may be, for example, brain wave, heart rate, or the like. The biometric sensor 72 is not particularly limited as long as the biometric sensor can measure the biometric information to be measured, and for example, a known brain wave sensor, pulse sensor, or the like may be used therefor. The biometric sensor 72 is mounted on the body part of the driver D corresponding to the biometric information to be measured.

The speaker 73 is configured to output voice. The speaker 73 is used to warn the driver D to take a suitable state for driving the vehicle when the driver D is not in a state suitable for driving the vehicle while the vehicle is traveling. Details are described later.

Besides, an external device other than the above external device may be connected to the external interface 13. For example, a communication module for performing data communication via a network may be connected to the external interface 13. The external device connected to the external interface 13 is not limited to each of the above devices and may be appropriately selected according to the embodiment.

In addition, in the example of FIG. 3, the automatic driving support device 1A includes one external interface 13. However, the external interface 13 may be arranged for each external device to be connected. The number of the external interface 13 can be appropriately selected according to the embodiment.

Besides, regarding the specific hardware configuration of the automatic driving support device 1A, omissions, replacements, and additions of constituent elements can be made appropriately according to the embodiment. For example, the control unit 11 may include a plurality of hardware processors. The hardware processor may be configured by a microprocessor, a FPGA (field-programmable gate array), and the like. The storage unit 12 may be configured by the RAM and the ROM included in the control unit 11. The storage unit 12 may be configured by an auxiliary storage device such as a hard disk drive or a solid state drive. The automatic driving support device 1A may include a communication interface for data communication with an external device via a network. The automatic driving support device 1A may include an input device and an output device. In addition, as the automatic driving support device 1A, in addition to an information processing device designed specifically for the provided service, a mobile terminal such as a smartphone, a general computer such as a tablet PC (Personal Computer) may be used. The automatic driving support device 1A may be configured by a computer integrated with the navigation device 70.

<Learning device>

Next, an example of the hardware configuration of the learning device 6 according to the embodiment is described with reference to FIG. 4. FIG. 4 schematically illustrates an example of the hardware configuration of the learning device 6 according to the embodiment.

As shown in FIG. 4, the learning device 6 according to the embodiment is a computer in which a control unit 61, a storage unit 62, a communication interface 63, an input device 64, an output device 65, and a drive 66 are electrically connected. Besides, in FIG. 4, the communication interface is described as "communication I/F".

Similar to the control unit 11, the control unit 61 includes a CPU serving as a hardware processor, a RAM, a ROM and the like, and is configured to execute various information processing based on programs and data. The storage unit 62 is configured by, for example, a hard disk drive, a solid state drive, or the like. The storage unit 62 stores a learning program 621 executed by the control unit 61, a data set 3A used for the learning of the learner, each of learning result data (122, 123) generated by executing the learning program 621, and the like.

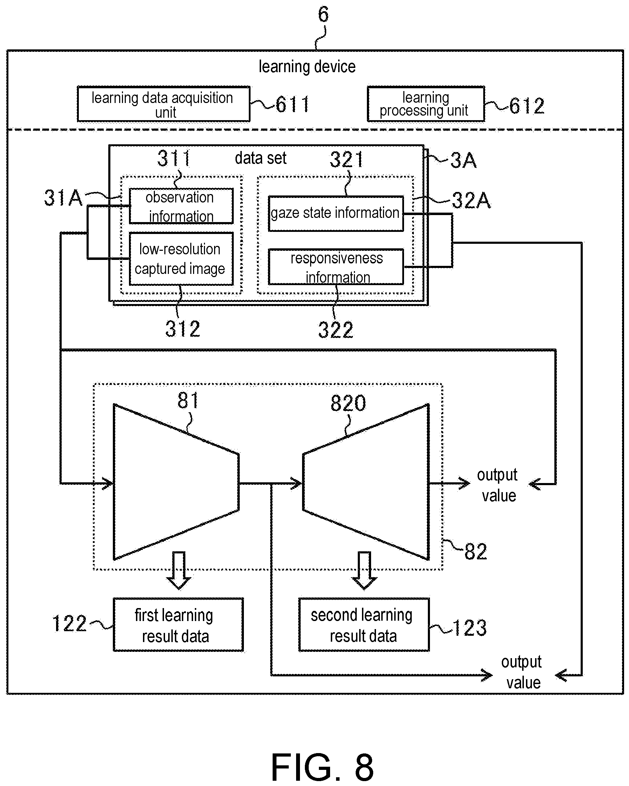

The learning program 621 is a program for causing the learning device 6 to execute machine learning processing described later (FIG. 11). The data set 3A includes a pair of training data 31A and correct answer data 32A described later (FIG. 8), and is used for the supervised learning of the first learner. In addition, the training data 31A of the data set 3A is used for the unsupervised learning of the second learner. The data set 3A is an example of the data set 3 described above. Details are described later.

The communication interface 63 is, for example, a wired LAN (Local Area Network) module, a wireless LAN module, or the like, and is an interface for performing wired or wireless communication via a network. The learning device 6 can deliver the created learning result data (122, 123) to an external device such as the automatic driving support device 1A via the communication interface 63.

The input device 64 is a device for inputting, such as a mouse, a keyboard or the like. The output device 65 is a device for outputting, such as a display, a speaker or the like. The operator can operate the learning device 6 via the input device 64 and the output device 65.

The drive 66 is, for example, a CD drive, a DVD drive or the like, and is a drive device for reading programs stored in a storage medium 92. The type of the drive 66 may be appropriately selected according to the type of the storage medium 92. At least one of the learning program 621 and the data set 3A may be stored in the storage medium 92.

The storage medium 92 is a medium which accumulates information such as recorded programs by an electrical, magnetic, optical, mechanical or chemical action, so that a device, machine or the like other than the computer can read the information such as the programs. The learning device 6 may acquire at least one of the learning program 621 and the data set 3A from the storage medium 92.

Here, in FIG. 4, a disk-type storage medium such as a CD or a DVD is illustrated as an example of the storage medium 92. However, the type of the storage medium 92 is not limited to the disk-type and may be a type other than the disk-type. The storage medium other than the disk-type may be, for example, a semiconductor memory such as a flash memory.

Besides, regarding the specific hardware configuration of the learning device 6, omissions, replacements, and additions of constituent elements can be made appropriately according to the embodiment. For example, the control unit 61 may include a plurality of hardware processors. The hardware processor may be configured by a microprocessor, a FPGA or the like. The learning device 6 may be configured by a plurality of information processing devices. In addition, the learning device 6 may be a general server device, a general PC or the like in addition to the information processing device designed specifically for the provided service.

[Software configuration]

<Automatic driving support device>

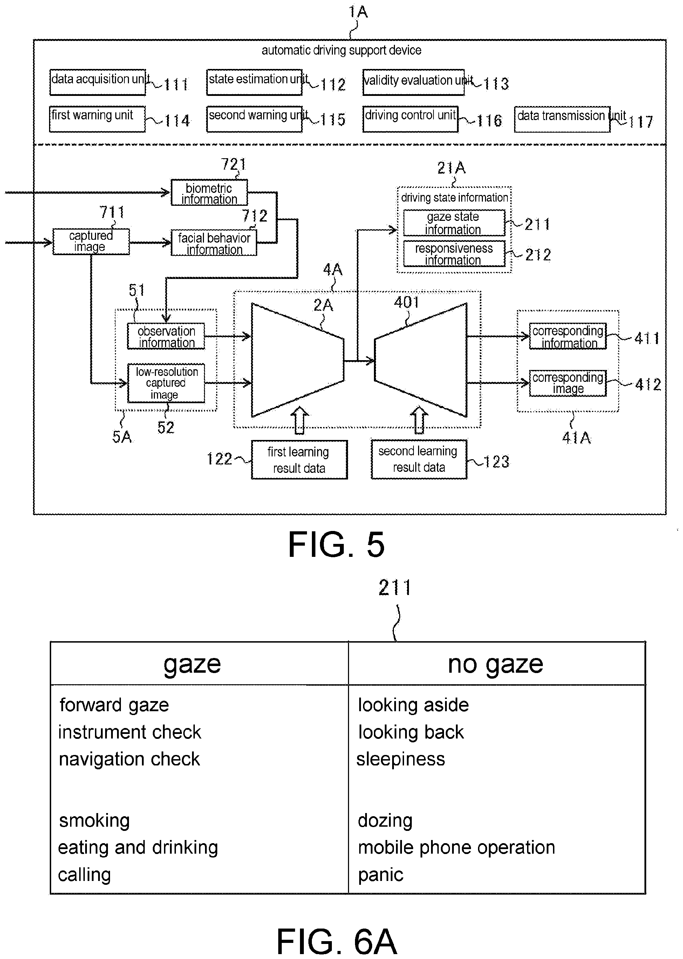

Next, an example of the software configuration of the automatic driving support device 1A according to the embodiment is described with reference to FIG. 5. FIG. 5 schematically illustrates an example of the software configuration of the automatic driving support device 1A according to the embodiment.

The control unit 11 of the automatic driving support device 1A expands the program 121 stored in the storage unit 12 into the RAM. Then, the control unit 11 interprets and executes the program 121 expanded in the RAM by the CPU to control each constituent element. Thereby, as shown in FIG. 5, the automatic driving support device 1A according to the embodiment is configured as a computer which includes, as the software modules, a data acquisition unit 111, a state estimation unit 112, a validity evaluation unit 113, a first warning unit 114, a second warning unit 115, an driving control unit 116, and a data transmission unit 117.

The data acquisition unit 111 acquires input data 5A input to a learning-finish neural network 2A. The neural network 2A is an example of the learning-finish first learner 2, and the input data 5A is an example of the input data 5. In the embodiment, the data acquisition unit 111 acquires a captured image 711 from the camera 71 disposed to capture images of the driver D sitting in the driver seat of the vehicle. In addition, the data acquisition unit 111 acquires observation information 51 including facial behavior information 712 regarding the facial behavior of the driver D and biometric information 721 measured by the biometric sensor 72. In an example of the embodiment, the facial behavior information 712 is obtained by image analysis of the captured image 711. Furthermore, the data acquisition unit 111 forms a low-resolution captured image 52 by reducing the resolution of the captured image 711 that has been acquired. Thereby, the data acquisition unit 111 acquires the input data 5A including the observation information 51 and the low-resolution captured image 52. Besides, the low-resolution captured image 52 is an example of the "image data that can be captured of the driver sitting in the driver seat of the vehicle" of the present invention.

The state estimation unit 112 includes the learning-finish neural network 2A that has undergone supervised learning for estimating the state of the driver using the data set 3A described later. The state estimation unit 112 inputs the input data 5A to the learning-finish neural network 2A and obtains output from the neural network 2A. Thereby, the state estimation unit 112 performs an inference for estimating the state of the driver on the input data 5A. The state estimation unit 112 is an example of the "inference unit" of the present invention.

In the embodiment, the output obtained from the learning-finish neural network 2A by inputting the input data 5A to the learning-finish neural network 2A includes driving state information 21A indicating the state of the driver. The driving state information 21A is an example of the output 21. In the embodiment, the driving state information 21A includes gaze state information 211 indicating the gaze state of the driver D and responsiveness information 212 indicating the degree of the responsiveness of the driver D to driving.

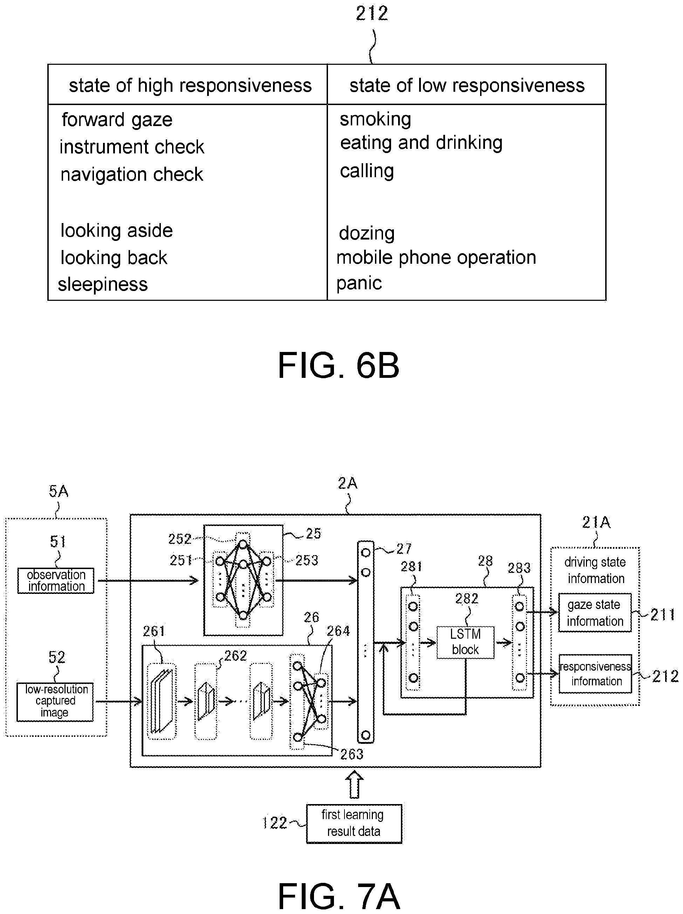

Here, the gaze state information 211 and the responsiveness information 212 are described with reference to FIGS. 6A and 6B. FIGS. 6A and 6B show examples of the gaze state information 211 and the responsiveness information 212. As shown in FIG. 6A, the gaze state information 211 according to the embodiment indicates, step by step on two levels, whether the driver D is paying sufficient attention to driving. In addition, as shown in FIG. 6B, the responsiveness information 212 according to the embodiment indicates, step by step on two levels, whether the responsiveness to driving is high or low. Besides, the degree of the responsiveness indicates the degree of the preparation for driving, in other words, the extent to which the driver is in a state of being capable of manually driving the vehicle. More specifically, the degree of the responsiveness indicates the extent to which the driver can immediately respond to manual driving of the vehicle when the action mode of the vehicle is switched from automatic driving to manual driving. Therefore, the responsiveness information 212 can represent, for example, the extent to which the driver D can return to the state of manually driving the vehicle.

The relationship between the behavioral state of the driver D and the gaze state and the responsiveness of the driver D can be set appropriately. For example, when the driver D is in the behavioral states of "forward gaze", "instrument check", and "navigation check", it can be estimated that the driver D is paying sufficient attention to driving and the responsiveness to driving is high. Therefore, in the embodiment, in response to the fact that the driver D is in the behavioral states of "forward gaze", "instrument check", and "navigation check", the gaze state information 211 is set to indicate that the driver D is paying sufficient attention to driving, and the responsiveness information 212 is set to indicate that the driver D is in the state of high responsiveness to driving. Besides, "forward gaze" refers to a state in which the driver D is gazing in the traveling direction of the vehicle. "Instrument check" refers to a state in which the driver D is checking the instrument such as a speedometer of the vehicle. "Navigation check" refers to a state in which the driver D is check the route guidance of the navigation device 70.

In addition, for example, when the driver D is in the behavioral states of "smoking", "eating and drinking", and "calling", it can be estimated that the driver D is paying sufficient attention to driving but the responsiveness to driving is low. Therefore, in the embodiment, in response to the fact that the driver D is in the behavioral states of "smoking", "eating and drinking", and "calling", the gaze state information 211 is set to indicate that the driver D is paying sufficient attention to driving, and the responsiveness information 212 is set to indicate that the driver D is in the state of low responsiveness to driving. "Smoking" refers to a state in which the driver D is smoking. "Eating and drinking" refers to a state in which the driver D is eating and drinking. "Calling" refers to a state in which the driver D is talking on a telephone such as a mobile phone.

In addition, for example, when the driver D is in the behavioral states of "looking aside", "looking back", and "sleepiness", it can be estimated that the driver D is not paying sufficient attention to driving but the responsiveness to driving is relatively high. Therefore, in the embodiment, in response to the fact that the driver D is in the behavioral states of "looking aside", "looking back", and "sleepiness", the gaze state information 211 is set to indicate that the driver D is not paying sufficient attention to driving, and the responsiveness information 212 is set to indicate that the driver D is in the state of high responsiveness to driving. Besides, "looking aside" refers to a state in which the driver D is looking away from the front. "Looking back" refers to a state in which the driver D is looking back toward the back seat. "Sleepiness" refers to a state in which the driver D is sleepy.

In addition, for example, when the driver D is in the behavioral states of "dozing", "mobile phone operation", and "panic", it can be estimated that the driver D is not paying sufficient attention to driving and the responsiveness to driving is low. Therefore, in the embodiment, in response to the fact that the driver D is in the behavioral states of "dozing", "mobile phone operation", and "panic", the gaze state information 211 is set to indicate that the driver D is not paying sufficient attention to driving, and the responsiveness information 212 is set to indicate that the driver is in the state of low responsiveness to driving. Besides, "dozing" refers to a state in which the driver D is dozing. "Mobile phone operation" refers to a state in which the driver D is operating a mobile phone. "Panic" refers to a state in which the driver D becomes panic due to a sudden change in physical condition or the like.

The validity evaluation unit 113 includes a learning-finish autoencoder 4A. Based on output 41A obtained from the autoencoder 4A by inputting the input data 5A to the learning-finish autoencoder 4A, the validity evaluation unit 113 evaluates whether valid output is able to be obtained from the neural network 2A as an inference result for the input data 5A when the input data 5A is input to the neural network 2A. The learning-finish autoencoder 4A is an example of the second learner 4.

The autoencoder is a neural network that has undergone machine-learning to bring the output closer to the input, and consists of an encoder and a decoder. The encoder is a neural network that has undergone machine-learning to perform some conversions (encoding) on the input, and the decoder is a neural network that has undergone machine-learning to reproduce (decode) the input from the output of the encoder.

In the embodiment, the neural network 2A which is the learning-finish first learner also operates as the encoder of the autoencoder 4A which is the learning-finish second learner, and corresponds to an example of the "first encoder" and the "second encoder" of the present invention. Therefore, the autoencoder 4A according to the embodiment is configured by the neural network 2A (encoder) and a decoder 401 constructed to reproduce the input from the output of the neural network 2A. The output (driving state information 21A) obtained from the neural network 2A by inputting the input data 5A to the neural network 2A is input to the decoder 401 according to the embodiment. When the output (driving state information 21A) of the neural network 2A is input to the decoder 401 according to the embodiment, the output 41A including corresponding information 411 corresponding to the observation information 51 included in the input data 5A and a corresponding image 412 corresponding to the low-resolution captured image 52 is obtained from the decoder 401. Therefore, the validity evaluation unit 113 according to the embodiment compares the input data 5A and the output 41A and thereby evaluates the validity of the inference result obtained by the neural network 2A. Besides, the output 41A is an example of the output 41.

When the validity evaluation unit 113 evaluates that valid output is not able to be obtained from the neural network 2A as an inference result for the input data 5A when the input data 5A is input to the neural network 2A, the first warning unit 114 issues a warning regarding the output that is obtained from the neural network 2A as the inference result to the input data 5A by inputting the input data 5A to the neural network 2A. The first warning unit 114 is an example of the "warning unit" of the present invention.

The second warning unit 115 determines, based on the driving state information 21A, whether the driver D is in the state suitable for driving the vehicle. Then, when it is determined that the driver D is not in the state suitable for driving the vehicle, the second warning unit 115 issues a warning that prompts the driver D to take a state suitable for driving the vehicle.

The driving control unit 116 accesses a driving system and a control system of the vehicle, and thereby controls actions of the vehicle to selectively execute an automatic driving mode in which a driving operation is automatically performed without depending on the driver D and a manual driving mode in which a driving operation is manually performed by the driver D. In the embodiment, the driving control unit 116 is configured to switch between the automatic driving mode and the manual driving mode according to the driving state information 21A and the like.

As an example, when the automatic control mode is being executed, the driving control unit 116 determines whether the state of the driver D indicated by the driving state information 21A satisfies criteria defining conditions for permitting the driving of the vehicle. Then, when the driving control unit 116 determines that the state of the driver D indicated by the driving state information 21A satisfies the criteria, switching from the automatic driving mode to the manual driving mode is permitted, and an instruction of the switching is output to the vehicle. On the other hand, when it is determined that the state of the driver D indicated by the driving state information 21A does not satisfy the criteria, the driving control unit 116 does not permit the switching from the automatic driving mode to the manual driving mode. In this case, the driving control unit 116 controls the action of the vehicle in a mode other than the manual driving mode, such as continuing the automatic driving mode or stopping the vehicle in a predetermined stop section. Besides, one action of the driving control unit 116 based on the driving state information 21A corresponds to the action of the "action execution unit" of the present invention.

When the validity evaluation unit 113 evaluates that valid output is not able to be obtained from the neural network 2A as an inference result for the input data 5A when the input data 5A is input to the neural network 2A, the data transmission unit 117 transmits the input data 5A to a predetermined storage location. Besides, the predetermined storage location is not particularly limited and may be appropriately selected according to the embodiment. For example, the predetermined storage location may be the storage unit 62 of the learning device 6, a NAS (Network Attached Storage), or the like.

(First learner)

Next, the neural network 2A, which is an example of the first learner, is described using FIG. 7A. FIG. 7A schematically illustrates an example of the configuration of the neural network 2A according to the embodiment. As shown in FIG. 7A, the neural network 2A according to the embodiment is configured by combining a plurality of types of neural networks.

Specifically, the neural network 2A is divided into four parts which are a fully-coupled neural network 25, a convolutional neural network 26, a coupling layer 27, and a LSTM (Long short-term memory) network 28. The fully-coupled neural network 25 and the convolutional neural network 26 are disposed in parallel on the input side, the observation information 51 is input to the fully-coupled neural network 25, and the low-resolution captured image 52 is input to the convolutional neural network 26. The coupling layer 27 couples the output of the fully-coupled neural network 25 and the output of the convolutional neural network 26. The LSTM network 28 receives the output from the coupling layer 27 and outputs the gaze state information 211 and the responsiveness information 212.

(a) Fully-coupled neural network

The fully-coupled neural network 25 is a so-called multilayered neural network and includes an input layer 251, an intermediate layer (hidden layer) 252, and an output layer 253 in order from the input side. However, the number of the layers of the fully-coupled neural network 25 is not limited to this example and may be appropriately selected according to the embodiment.

Each of the layers 251-253 includes one or more neurons (nodes). The number of the neurons included in each of the layers 251-253 may be set appropriately according to the embodiment. The fully-coupled neural network 25 is configured by coupling each neuron included in each of the layers 251-253 to all neurons included in an adjacent layer. A weight (coupling weight) is set appropriately for each coupling.

(b) Convolutional neural network

The convolutional neural network 26 is a forward-propagation neural network having a structure in which convolutional layers 261 and pooling layers 262 are alternately connected. In the convolutional neural network 26 according to the embodiment, a plurality of convolutional layers 261 and a plurality of pooling layers 262 are alternately disposed on the input side. Then, the output of the pooling layer 262 disposed closest to the output side is input to the fully-coupled layer 263, and the output of the fully-coupled layer 263 is input to the output layer 264.

The convolution layer 261 is a layer in which calculation of an image convolution is performed. The image convolution corresponds to processing for calculating the correlation between an image and a predetermined filter. Therefore, by performing the image convolution, for example, a light and shade pattern similar to the light and shade pattern of the filter can be detected from the input image.

The pooling layer 262 is a layer in which pooling processing is performed. The pooling processing discards a part of the information on a position of the image where the response to the filter is strong, and realizes the invariance of the response to the minute position change of the characteristic appearing in the image.

The fully-coupled layer 263 is a layer in which all neurons between adjacent layers are coupled. That is, each neuron included in the fully-coupled layer 263 is coupled to all neurons included in the adjacent layer. The convolutional neural network 26 may include two or more fully-coupled layers 263. In addition, the number of the neurons included in the fully-coupled layer 263 may be set appropriately according to the embodiment.

The output layer 264 is a layer disposed closest to the output side of the convolutional neural network 26. The number of the neurons included in the output layer 264 may be set appropriately according to the embodiment. Besides, the configuration of the convolutional neural network 26 is not limited to this example and may be set appropriately according to the embodiment.

(c) Coupling layer

The coupling layer 27 is disposed between the fully-coupled neural network 25, the convolutional neural network 26 and the LSTM network 28. The coupling layer 27 couples the output from the output layer 253 of the fully-coupled neural network 25 and the output from the output layer 264 of the convolutional neural network 26. The number of the neurons included in the coupling layer 27 may be set appropriately according to the number of the outputs of the fully-coupled neural network 25 and the convolutional neural network 26.

(d) LSTM network

The LSTM network 28 is a recurrent neural network including a LSTM (Long short-term memory) block 282. The restarting neural network is, for example, a neural network having a loop inside as a path from the intermediate layer to the input layer. The LSTM network 28 has a structure in which the intermediate layer of a general restarting neural network is replaced with the LSTM block 282.

In the embodiment, the LSTM network 28 includes an input layer 281, the LSTM block 282, and an output layer 283 in order from the input side, and has a path returning from the LSTM block 282 to the input layer 281 in addition to a forward propagation path. The number of the neurons included in the input layer 281 and the output layer 283 may be set appropriately according to the embodiment.

The LSTM block 282 is a block including an input gate and an output gate and configured to be capable of learning the timing of information storage and output (S. Hochreiter and J. Schmidhuber, "Long short-term memory" Neural Computation, 9(8): 1735-1780, November 15, 1997). In addition, the LSTM block 282 may also include a forget gate that adjusts the timing of information forgetting (Felix A. Gers, Jurgen Schmidhuber and Fred Cummins, "Learning to Forget: Continual Prediction with LSTM" Neural Computation, pages 2451-2471, October 2000). The configuration of the LSTM network 28 can be set appropriately according to the embodiment.

(e) Summary

A threshold value is set for each neuron, and basically, the output of each neuron is determined by whether the sum of products of each input and each weight exceeds the threshold value. The automatic driving support device 1A inputs the observation information 51 to the fully-coupled neural network 25 and inputs the low-resolution captured image 52 to the convolutional neural network 26. Then, the automatic driving support device 1A performs ignition determination of each neuron included in each layer in order from the input side. Thereby, the automatic driving support device 1A acquires the output values corresponding to the gaze state information 211 and the responsiveness information 212 from the output layer 283 of the neural network 2A as the inference result to the input data 5A.

Besides, information indicating the configuration of the neural network 2A (for example, the number of the layers in each network, the number of the neurons in each layer, the coupling relationship between the neurons, the transfer function of each neuron), the weight of coupling between the neurons, and the threshold value of each neuron is included in the first learning result data 122. The automatic driving support device 1A refers to the first learning result data 122 to set the learning-finish neural network 2A used in the processing for estimating the driving state of the driver D.

(Second learner)

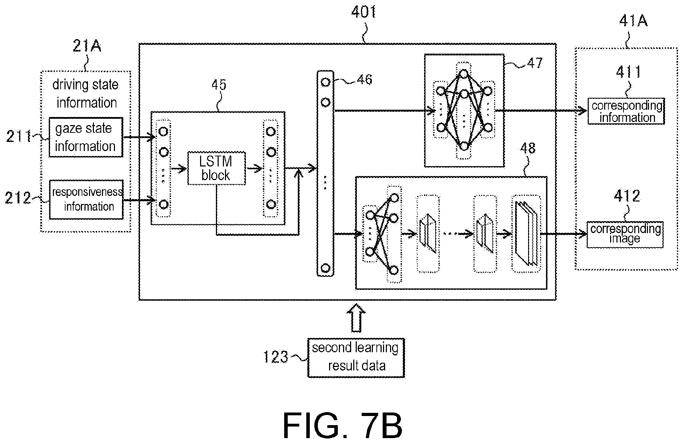

Next, the autoencoder 4A which is an example of the second learner is described using FIG. 7B. As described above, the autoencoder 4A is configured by the neural network 2A (encoder) and the decoder 401. FIG. 7B schematically illustrates the configuration of the decoder 401. As shown in FIG. 7B, the decoder 401 according to the embodiment has a structure in which the input side and the output side of the neural network 2A are inverted.

Specifically, the decoder 401 is divided into a first part 45 to a fourth part 48. The first part 45 disposed on the input side has a structure in which the input side and the output side of the LSTM network 28 are inverted. The second part 46 corresponds to the coupling layer 27. The second part 46 receives the output from the first part 45 and outputs the result of the ignition determination of each neuron separately to the third part 47 and the fourth part 48. The third part 47 and the fourth part 48 are disposed in parallel on the output side and correspond to the fully-coupled neural network 25 and the convolutional neural network 26. The third part 47 has a structure in which the input side and the output side of the fully-coupled neural network 25 are inverted. The third part 47 receives the output from the second part 46 and outputs the corresponding information 411. The fourth part 48 has a structure in which the input side and the output side of the convolutional neural network 26 are inverted. The fourth part 48 receives the output from the second part 46 and outputs the corresponding image 412.

Similar to the neural network 2A, a threshold value is set for each neuron that constitutes the parts 45 to 48 of the decoder 401, and basically, the output of each neuron is determined by whether the sum of products of each input and each weight exceeds the threshold value. The automatic driving support device 1A inputs the output (driving state information 21A) of the neural network 2A to the first part 45. Then, the automatic driving support device 1A performs ignition determination of each neuron included in each layer in order from the input side. Thereby, the automatic driving support device 1A acquires the output 41A including the corresponding information 411 and the corresponding image 412 from the output layer of the decoder 401.

Here, as described above, the decoder of the autoencoder is a neural network that has undergone machine-learning to reproduce the input from the output of the encoder. Therefore, the decoder 401 of the autoencoder 4A is preferably configured to have a structure that completely matches the structure in which the input side and the output side of the neural network 2A are inverted. However, the configuration of the decoder 401 is not limited to this example, and may be appropriately determined according to the embodiment as long as the corresponding information 411 and the corresponding image 412 can be output. The structure of the decoder 401 may not completely match the structure in which the input side and the output side of the neural network 2A are inverted.

Besides, in the embodiment, the information indicating the configuration of the neural network 2A which is an encoder and the like is included in the first learning result data 122. Therefore, the second learning result data 123 according to the embodiment includes the information indicating the configuration of the decoder 401 (for example, the number of the layers in each part, the number of the neurons in each layer, the coupling relationship between the neurons, the transfer function of each neuron), the weight of coupling between the neurons, and the threshold value of each neuron. The information indicating the configuration of the neural network 2A which is an encoder and the like may be omitted from the second learning result data 123. The automatic driving support device 1A refers to the first learning result data 122 to set the neural network 2A, and refers to the second learning result data 123 to set the decoder 401. Thereby, the learning-finish autoencoder 4A used in the processing for evaluating the validity of the inference result obtained by the neural network 2A is set. However, the content of the second learning result data 123 may not be limited to this example. The second learning result data 123 may include the information indicating the configuration of the decoder and the like, and the information indicating the configuration of the encoder and the like.

<Learning device>

Next, an example of the software configuration of the learning device 6 according to the embodiment is described with reference to FIG. 8. FIG. 8 schematically illustrates an example of the software configuration of the learning device 6 according to the embodiment.

The control unit 61 of the learning device 6 expands the learning program 621 stored in the storage unit 62 into the RAM. Then, the control unit 61 interprets and executes the learning program 621 expanded into the RAM by the CPU to control each constituent element. Thereby, as shown in FIG. 8, the learning device 6 according to the embodiment is configured as a computer which includes, as the software modules, a learning data acquisition unit 611 and a learning processing unit 612.

The learning data acquisition unit 611 acquires the data set 3A used for machine learning. The data set 3A including a pair of the training data 31A and the correct answer data 32A. The training data 31A is an example of the training data 31, and the correct answer data 32A is an example of the correct answer data 32A. In the embodiment, the training data 31A includes observation information 311 and a low-resolution captured image 312. The observation information 311 and the low-resolution captured image 312 correspond to the observation information 51 and the low-resolution captured image 52. On the other hand, the correct answer data 32A includes gaze state information 321 and responsiveness information 322 so as to show the correct answer of an estimation result of the state of the driver with respect to the training data 31A. The gaze state information 321 and the responsiveness information 322 correspond to the gaze state information 211 and the responsiveness information 212.

The learning processing unit 612 uses the training data 31A and the correct answer data 32A that constitute the data set 3A to implement supervised learning of a neural network 81. Specifically, when the observation information 311 and the low-resolution captured image 312 are input, the learning processing unit 612 trains the neural network 81 so as to output the output values corresponding to the gaze state information 321 and the responsiveness information 322. In addition, the learning processing unit 612 uses the training data 31A included in the data set 3A to implement unsupervised learning of an autoencoder 82. Specifically, when the output of the neural network 81 is input, the learning processing unit 612 trains a decoder 820 of the autoencoder 82 so as to output the output values corresponding to the observation information 311 and the low-resolution captured image 312.

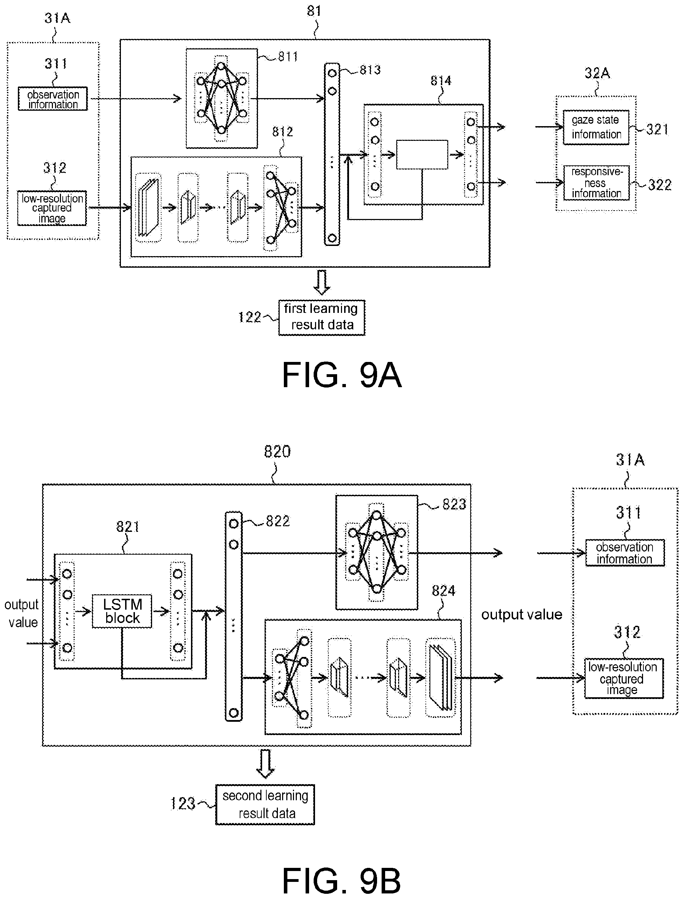

FIG. 9A schematically illustrates an example of a learning process of the neural network 81, and FIG. 9B schematically illustrates an example of a learning process of the decoder 820 of the autoencoder 82. As shown in FIG. 9A, the neural network 81 according to the embodiment includes a fully-coupled neural network 811, a convolutional neural network 812, a coupling layer 813, and a LSTM network 814, and is configured in the same manner as the neural network 2A. The fully-coupled neural network 811, the convolutional neural network 812, the coupling layer 813, and the LSTM network 814 are respectively the same as the fully-coupled neural network 25, the convolutional neural network 26, the coupling layer 27, and the LSTM network 28. In addition, as shown in FIG. 9B, the decoder 820 according to the embodiment includes a first part 821 to a fourth part 824 and is configured in the same manner as the decoder 401. Each of the parts 821 to 824 is the same as each of the parts 45 to 48. Thereby, the autoencoder 82 according to the embodiment is configured in the same manner as the autoencoder 4A.

When the learning processing unit 612 inputs the observation information 311 to the fully-coupled neural network 811 and inputs the low-resolution captured image 312 to the convolutional neural network 812 by the learning processing of the neural network, the neural network 81 which outputs the output values corresponding to the gaze state information 321 and the responsiveness information 322 from the LSTM network 814 is constructed. Then, the learning processing unit 612 stores, in the storage unit 62, information indicating the configuration of the constructed neural network 81, the weight of coupling between the neurons, and the threshold value of each neuron as the first learning result data 122.

Similarly, when the learning processing unit 612 inputs the output of the neural network 81 to the first part 821 by the learning processing of the neural network, the decoder 820 is constructed which outputs the output value corresponding to the observation information 311 from the third part 823 and outputs the output value corresponding to the low-resolution captured image 312 from the fourth part 824. Then, the learning processing unit 612 stores, in the storage unit 62, information indicating the configuration of the constructed decoder 820, the weight of coupling between the neurons, and the threshold value of each neuron as the second learning result data 123.

<Others>

Each software module of the automatic driving support device 1A and the learning device 6 is described in detail in an action example described later. Besides, in this embodiment, an example is described in which each software module of the automatic driving support device 1A and the learning device 6 is implemented by a general CPU. However, some or all of each software module may be implemented by one or more dedicated processors. In addition, with respect to the respective software configurations of the automatic driving support device 1A and the learning device 6, the software modules may be omitted, replaced, or added appropriately according to the embodiment.

§3 Action Example

[Automatic driving support device]

Next, an action example of the automatic driving support device 1A is described with reference to FIGS. 10A and 10B. FIGS. 10A and 10B are flow charts illustrating an example of the processing procedure of the automatic driving support device 1A. The processing procedure of evaluating the validity of the estimation result obtained by the neural network 2A described below is an example of the "evaluation method" of the present invention. However, the processing procedure described below is merely an example, and each processing may be changed as much as possible. In addition, regarding the processing procedure described below, steps can be omitted, replaced, and added appropriately according to the embodiment.

(Activation)

First, the driver D activates the automatic driving support device 1A by turning on an ignition power supply of the vehicle, and causes the activated automatic driving support device 1A to execute the program 121. Thereby, the control unit 11 of the automatic driving support device 1A monitors the state of the driver D and controls the driving mode of the vehicle according to the following processing procedure. Besides, the trigger for executing the program 121 is not limited to the turning on of the ignition power supply of the vehicle, and may be appropriately selected according to the embodiment. For example, the execution of the program 121 may be disclosed using an instruction from the driver D via an input device (not shown) as the trigger.

(Step S101)

In step S101, the control unit 11 acts as the driving control unit 116 and starts the automatic driving of the vehicle. For example, the control unit 11 acquires map information, surrounding information, and GPS information from the navigation device 70, and performs the automatic driving of the vehicle based on the acquired map information, surrounding information, and GPS information. A known control method can be used as the control method for the automatic driving. When the automatic driving mode of the vehicle is started, the control unit 11 advances the processing to the next step S102.

(Step S102)

In step S102, the control unit 11 acts as the driving control unit 116, and determines whether an instruction of switching the action of the vehicle from the automatic driving mode to the manual driving mode is received. When it is determined that the instruction of switching to the manual driving mode has been received, the control unit 11 advances the processing to the next step S103. On the other hand, when it is determined that the instruction of switching to the manual driving mode has not been received, the control unit 11 executes the processing of step S102 again after a predetermined time has elapsed.

Besides, the trigger for instructing the switching from the automatic driving mode to the manual driving mode may be set appropriately according to the embodiment. For example, an instruction from the driver D via an input device (not shown) of the automatic driving support device 1A may be used as the trigger. In this case, in response to the driver D performing the operation of switching to the manual driving mode, the control unit 11 determines that the instruction of switching to the manual driving mode has been received. On the other hand, when this operation is not performed, the control unit 11 determines that the instruction of switching to the manual driving mode has not been received, and repeatedly executes the processing of step S102.

(Step S103)

In step S103, the control unit 11 acts as the data acquisition unit 111 and acquires the input data 5A input to the learning-finish neural network 2A. When the input data 5A is acquired, the control unit 11 advances the processing to the next step S104.

The method for acquiring the input data 5A may be appropriately determined according to the embodiment. As an example, first, the control unit 11 acquires the captured image 711 from the camera 71 disposed to capture images of the driver D sitting in the driver seat of the vehicle. The captured image 711 may be a moving image or a still image. Next, the control unit 11 acquires the observation information 51 including the facial behavior information 712 regarding the facial behavior of the driver D and the biometric information 721 measured by the biometric sensor 72. In addition, the control unit 11 forms the low-resolution captured image 52 by reducing the resolution of the acquired captured image 711. Thereby, the control unit 11 can acquire the input data 5A including the observation information 51 and the low-resolution captured image 52.

Besides, the facial behavior information 712 can be acquired appropriately. For example, the control unit 11 performs known image analysis such as face detection on the captured image 711, and thereby acquires, as the facial behavior information 712, information regarding at least one of the availability of facial detection, the facial position, the facial orientation, the facial movement, the gaze direction, the position of facial organs, and the opening and closing of eyes of the driver D.

As a specific example, first, the control unit 11 detects the face of the driver D from the captured image 711, and specifies the position of the detected face. Thereby, the control unit 11 can acquire the information regarding the availability of facial detection and the facial position. In addition, by continuously performing the facial detection, the control unit 11 can acquire the information regarding the facial movement. Next, the control unit 11 detects each organ (eye, mouse, nose, ear, and the like) included in the face of the driver D in the detected facial image. Thereby, the control unit 11 can acquire the information regarding the position of the facial organs. Then, the control unit 11 can acquire the information regarding the facial orientation, the gaze direction, and the opening and closing of eyes by analyzing the state of each detected organ (eye, mouse, nose, ear, and the like). A known image analysis method may be used for facial detection, organ detection, and organ state analysis.

When the acquired captured image 711 is a moving image or a plurality of still images arranged in time series, the control unit 11 can acquire various information in time series by executing an image analysis of the images on each frame of the captured image 711. Thereby, the control unit 11 can acquire various information represented by a histogram or a statistic amount (average value, variance value, and the like) in the form of time-series data.

In addition, the control unit 11 can acquire the biometric information 721 such as the brain wave and the heart rate by accessing the biometric sensor 72. The biometric information 721 may be represented by, for example, a histogram or a statistic amount (average value, variance value, and the like). Similar to the facial behavior information 712, the control unit 11 can acquire the biometric information 721 in the form of time series data by continuously accessing the biometric sensor 72.

In addition, the processing method for reducing the resolution of the captured image 711 is not particularly limited and may be appropriately selected according to the embodiment. For example, the control unit 11 can form the low-resolution captured image 52 by applying known image processing, such as a nearest neighbor method, a bilinear interpolation method, and a bicubic method, to the captured image 711.

(Steps S104 and S105)

In step S104, the control unit 11 acts as the state estimation unit 112, inputs the input data 5A to the learning-finish neural network 2A, and executes calculation processing of the neural network 2A. Thereby, in step S105, the control unit 11 continues to act as the state estimation unit 112, and acquires, from the neural network 2A, the output values respectively corresponding to the gaze state information 211 and the responsiveness information 212 of the driving state information 21A.

Specifically, the control unit 11 inputs the observation information 51 of the input data 5A acquired in step S103 to the input layer 251 of the fully-coupled neural network 25, and inputs the low-resolution captured image 52 of the input data 5A to the convolutional layer 261 disposed closest to the input side of the convolutional neural network 26. Then, the control unit 11 performs the ignition determination of each neuron included in each layer in order from the input side. Thereby, the control unit 11 performs the inference for estimating the state of the driver D on the input data 5A, thereby acquiring the output values respectively corresponding to the gaze state information 211 and the responsiveness information 212 from the output layer 283 of the LSTM network 28. When the driving state information 21A including the gaze state information 211 and the responsiveness information 212 is acquired, the control unit 11 advances the processing to the next step S106. Besides, the control unit 11 may notify the driver D or the like of the content of the acquired driving state information 21A via an output device such as the speaker 73 or a display (not shown).

(Step S106)

In step S106, the control unit 11 acts as the validity evaluation unit 113, inputs the input data 5A to the autoencoder 4A, and executes calculation processing of the autoencoder 4A. In the embodiment, the output (driving state information 21A) of the neural network 2A that acts as the encoder of the autoencoder 4A is obtained in step S105. Therefore, in step S106, the control unit 11 inputs, to the decoder 401 of the autoencoder 4A, the driving state information 21A obtained from the neural network 2A by inputting the driving state information 21A to the neural network 2A. Then, the control unit 11 executes the calculation processing of the decoder 401. Thereby, the control unit 11 acquires, from the decoder 401 of the autoencoder 4A, the output values respectively corresponding to the corresponding information 411 and the corresponding image 412 as the output 41A.

Specifically, similar to the above step S104, the control unit 11 inputs the output values respectively corresponding to the gaze state information 211 and the responsiveness information 212 included in the driving state information 21A to the input side layer of the first part 45. Then, the control unit 11 performs the ignition determination of each neuron included in each layer in order from the input side. Thereby, the control unit 11 acquires the output value corresponding to the corresponding information 411 from the output side layer of the third part 47, and acquires the output value corresponding to the corresponding image 412 from the output side layer of the fourth part 48. When the output 41A including the corresponding information 411 and the corresponding image 412 is acquired, the control unit 11 advances the processing to the next step S107.

(Step S107)

In step S107, the control unit 11 continues to act as the validity evaluation unit 113 and evaluates, based on the output 41A obtained from the autoencoder 4A, whether valid output is able to be obtained from the neural network 2A as an inference result for the input data 5A when the input data 5A is input to the neural network 2A.

As described above, the decoder 401 of the autoencoder 4A reproduces the input from the output of the neural network 2A that is an encoder. The corresponding information 411 corresponds to the observation information 51, and the corresponding image 412 corresponds to the low-resolution captured image 52. The more the input data 5A is similar to the training data 31A of the data set 3A used for the supervised learning of the neural network 2A, the more the corresponding information 411 and the corresponding image 412 are respectively similar to the observation information 51 and the low-resolution captured image 52 included in the input data 5A. On the other hand, the more the input data 5A is different from the training data 31A, the more the corresponding information 411 and the corresponding image 412 respectively deviate from the observation information 51 and the low-resolution captured image 52.

Therefore, the control unit 11 calculates the difference between the corresponding information 411 included in the output 41 obtained from the autoencoder 4A and the observation information 51 included in the input data 5A input to the neural network 2A, and the difference between the corresponding image 412 included in the output 41 and the low-resolution captured image 52 included in the input data 5A. The calculated differences are also included in the "output obtained from the second learner" of the present invention. Then, the control unit 11 evaluates the validity of the output (driving state information 21A) of the neural network 2A based on the calculated differences.

Specifically, the larger the value of the calculated difference, the more the input data 5A is different in type from the training data 31A used for the machine learning of the neural network 2A, and it is assumed that the neural network 2A is likely to make a false inference on the input data 5A. Therefore, the control unit 11 evaluates that the larger the value of the calculated difference, the lower the validity of the output of the neural network 2A. On the other hand, the smaller the value of the calculated difference, the more the input data 5A matches the training data 31A used for the machine learning of the neural network 2A, and it is assumed that the neural network 2A is unlikely to make a false inference on the input data 5A . Therefore, the control unit 11 evaluates that the smaller the value of the calculated difference, the higher the validity of the output of the neural network 2A.

Besides, the method for expressing the result obtained by evaluating the validity of the output (driving state information 21A) of the neural network 2A is not particularly limited and may be appropriately selected according to the embodiment. For example, the control unit 11 may compare the calculated difference with a predetermined threshold value, and thereby determine whether valid output is able to be obtained from the neural network 2A as an inference result for the input data 5A when the input data 5A is input to the neural network 2A. The predetermined threshold value may be set arbitrarily. Then, the control unit 11 may output a value indicating the result of the determination (for example, a binary value of "0" and " 1") as the result of the validity evaluation.

In addition, for example, the control unit 11 may output, as a result of the evaluation, an evaluation value indicating the degree at which valid output is able to be obtained from the neural network 2A as an inference result for the input data 5A when the input data 5A is input to the neural network 2A. In this case, the control unit 11 may directly output the calculated difference as the evaluation value. In addition, the control unit 11 may output, as the evaluation value, a value that is obtained by applying predetermined calculation processing such as scale conversion to the calculated difference.

Besides, the output destination of the evaluation result such as the value indicating the determination result and the evaluation value may not be particularly limited and may be appropriately selected according to the embodiment. For example, the evaluation result may be output to a memory such as the RAM and the storage unit 12 for use in the processing after step S107. In addition, for example, the evaluation result may be output to an output device such as the display (not shown) and the speaker 73. After the validity of the output (driving state information 21A) of the neural network 2A is evaluated, the control unit 11 advances the processing to the next step S108.

(Step S108)

In step S108, the control unit 11 determines, based on the evaluation result in step S107, whether valid output is able to be obtained from the neural network 2A as an inference result for the input data 5A when the input data 5A is input to the neural network 2A.

In step S107, when it is evaluated that valid output is not able to be obtained from the neural network 2A as an inference result for the input data 5A when the input data 5A is input to the neural network 2A (NO in FIG. 10B), the control unit 11 advances the processing to step Sill. On the other hand, in step S107, when it is evaluated that valid output is able to be obtained from the neural network 2A as an inference result for the input data 5A when the input data 5A is input to the neural network 2A (YES in FIG. 10B), the control unit 11 advances the processing to step S109.

(Step S109)

In step S109, the control unit 11 acts as the second warning unit 115 and determines, based on the driving state information 21A acquired in step S105, whether the driver D is in the state suitable for driving the vehicle. When it is determined that the driver D is in the state suitable for driving the vehicle (YES in FIG. 10B), the control unit 11 advances the processing to step S110. On the other hand, when it is determined that the driver D is not in the state suitable for driving the vehicle, the control unit 11 advances the processing to step S113.

The criteria for determining that the driver D is not in the state suitable for driving the vehicle may be set appropriately according to the embodiment. For example, when the gaze state information 211 indicates that the driver D is not paying sufficient attention to driving or the responsiveness information 212 indicates that the driver D is in the state of low responsiveness to driving, the control unit 11 may determine that the driver D is not in the state suitable for driving the vehicle. In this case, when the gaze state information 211 indicates that the driver D is paying sufficient attention to driving or the responsiveness information 212 indicates that the driver D is in the state of high responsiveness to driving, the control unit 11 determines that the driver D is in the state suitable for driving the vehicle.

In addition, for example, when the gaze state information 211 indicates that the driver D is not paying sufficient attention to driving or the responsiveness information 212 indicates that the driver D is in the state of low responsiveness to driving, the control unit 11 may determine that the driver D is not in the state suitable for driving the vehicle. In this case, when the gaze state information 211 indicates that the driver D is paying sufficient attention to driving or the responsiveness information 212 indicates that the driver D is in the state of high responsiveness to driving, the control unit 11 determines that the driver D is in the state suitable for driving the vehicle.

(Step S110)

In step S110, the control unit 11 acts as the driving control unit 116 and switches the action of the vehicle from the automatic driving mode to the manual driving mode. Thereby, the control unit 11 starts the action of the manual driving mode in the vehicle and ends the processing of this action example. Besides, at the start of the manual driving mode, the control unit 11 may make an announcement to the driver D to start the driving operation such as gripping the steering wheel via the speaker 73 so that the action of the vehicle is switched to the manual driving mode.

(Step Sill)

In step Sill, the control unit 11 acts as the first warning unit 114, and issues a warning regarding the output (driving state information 21A) that is obtained from the neural network 2A as the inference result to the input data 5A. The content and the method of the warning may be set appropriately according to the embodiment. For example, the control unit 11 may issue a warning via an output device such as the speaker 73 and the display (not shown), to inform the driver D that the validity of the driving state information 21A obtained from the neural network 2A is low. When the warning is issued, the control unit 11 advances the processing to the next step S112.

(Step S112)

In step S112, the control unit 11 acts as the data transmission unit 117 and transmits the target input data 5A to a predetermined storage location as unknown training data, the target input data 5A being evaluated that valid output is not obtained from the neural network 2A as an inference result. The predetermined storage location may be set appropriately according to the embodiment. For example, the predetermined storage location may be an external storage device such as the storage unit 62 of the learning device 6 and a NAS. In this case, the control unit 11 may transmit the target input data 5A to the external storage device via the network. When the target input data 5A is transmitted to the predetermined storage location, the control unit 11 returns to step S103 and repeats the series of processing described above.

(Step S113)

In step S113, the control unit 11 acts as the second warning unit 115, and issues a warning to prompt the driver D to take a state suitable for driving the vehicle via an output device such as the speaker 73 and the display (not shown). The content and the method of the warning may be set appropriately according to the embodiment. When the warning is issued, the control unit 11 returns to step S103 and repeats the series of processing described above.

Besides, in the embodiment, the gaze state information 211 indicates whether the driver D is paying sufficient attention to driving step by step on two levels, and the responsiveness information 212 indicates whether the responsiveness to driving is high or low step by step on two levels. Therefore, the control unit 11 issues a warning step by step according to the gaze level of the driver D indicated by the gaze state information 211 and the responsiveness level of the driver D indicated by the responsiveness information 212.

For example, when the gaze state information 211 indicates that the driver D is not paying sufficient attention to driving, the control unit 11 may output a voice prompting the driver D to pay sufficient attention to driving from the speaker 73 as a warning. In addition, when the responsiveness information 212 indicates that the driver D is in the state of low responsiveness to driving, the control unit 11 may output a voice prompting the driver D to increase the responsiveness to driving from the speaker 73 as a warning. Furthermore, when the gaze state information 211 indicates that the driver D is not paying sufficient attention to driving, and the responsiveness information 212 indicates that the driver D is in the state of low responsiveness to driving, the control unit 11 may issue a warning stronger than that of the above two cases (for example, increasing the volume, making a beep, and the like).

(Others)

As described above, during the automatic driving of the vehicle, the automatic driving support device 1A can use the neural network 2A to monitor the driving state of the driver D, and use the autoencoder 4A to evaluate the inference result obtained by the neural network 2A. Besides, when determination is made a plurality of times in succession in step S109 that the driver D is not in the state suitable for driving the vehicle (NO in FIG. 10B), the automatic driving support device 1A may stop the automatic driving without returning to step S103. In this case, for example, the control unit 11 may refer to the map information, the surrounding information, and the GPS information to set a stop section at the location where the vehicle can be safely stopped. Then, the control unit 11 may issue a warning to inform the driver D of stopping the vehicle and cause the vehicle to be automatically stopped in the stop section that has been set. Thereby, the traveling of the vehicle can be stopped when the driver D is continuously in the state unsuitable for driving.

Furthermore, when determination is made once or a plurality of times in succession in step S108 that valid output is not able to be obtained from the neural network 2A as an inference result (NO in FIG. 10B), the automatic driving support device 1A may return to step S102 instead of step S103. Alternatively, when determination is made once or a plurality of times in succession in step S108 that valid output is not obtained from the neural network 2A as an inference result (NO in FIG. 10B), the automatic driving support device 1A may stop the automatic driving without returning to step S102. In this case, similar to the above description, the control unit 11 may refer to the map information, the surrounding information, and the GPS information and cause the vehicle to be automatically stopped in a stop section that is set at the location where the vehicle can be safely stopped.

[Learning device]

Next, an action example of the learning device 6 is described with reference to FIG. 11. FIG. 11 is a flow chart illustrating an example of the processing procedure of the learning device 6. The processing procedure described below is merely an example, and each processing may be changed as much as possible. In addition, regarding the processing procedure described below, steps can be omitted, replaced, and added appropriately according to the embodiment.

(Step S201)

In step S201, the control unit 61 of the learning device 6 acts as the learning data acquisition unit 611, and acquires the data set 3A including the pair of the training data 31A and the correct answer data 32A.

The data set 3A may be collected appropriately. For example, a vehicle equipped with the camera 71 is prepared, the biometric sensor 72 is mounted on the driver, and the image of the driver sitting in the driver seat is captured under various conditions. Then, the data set 3A can be created by associating the obtained captured image with the image-capturing conditions including the gaze state and the degree of responsiveness. At this time, the observation information 311 and the low-resolution captured image 312 constituting the training data 31A can be obtained by the same method as the method for acquiring the input data 5A in step S103. In addition, the control unit 61 may acquire the input data 5A transmitted by the processing of step S112 as the training data 31A. On the other hand, the gaze state information 321 and the responsiveness information 322 constituting the correct answer data 32A can be obtained by appropriately receiving the input of the state of the driver appearing in the captured image. Thereby, the data set 3A can be created.

Besides, the collection of the data set 3A may be manually performed by an operator or the like using the input device 64, or may be automatically performed by the processing of programs. For example, the data set 3A may be collected from the vehicle in operation at any time as a result of the processing of step S112. The number of the data set 3A acquired in step S201 may be appropriately determined to the degree that machine learning of the neural network 81 and the autoencoder 82 can be performed.

In addition, the creation of the data set 3A may be performed by an information processing device other than the learning device 6. When the learning device 6 creates the data set 3A, the control unit 61 can acquire the data set 3A by executes the above creation processing of the data set 3A in step S201. On the other hand, when an information processing device other than the learning device 6 creates the data set 3A, the learning device 6 may acquire the data set 3A created by this information processing device via a network, the storage medium 92, or the like. When the data set 3A is acquired, the control unit 61 advances the processing to the next step S202.

(Step S202)

In step S202, the control unit 61 acts as the learning processing unit 612, and performs the supervised learning of the neural network 81 by using the data set 3A acquired in step S201 so as to output, when the observation information 311 and the low-resolution captured image 312 are input, the output values respectively corresponding to the gaze state information 321 and the responsiveness information 322 paired with the observation information 311 and the low-resolution captured image 312 that are input.

Specifically, first, the control unit 61 prepares the neural network 81 to be subjected to learning processing. The configuration of the prepared neural network 81, the initial value of the coupling weight between the neurons, and the initial value of the threshold value of each neuron may be given by a template or an input from the operator. In addition, when re-learning is performed, the control unit 61 may prepare the neural network 81 based on the first learning result data 122 to be re-learned.

Next, the control unit 61 uses the training data 31A and the correct answer data 32A included in the data set 3A acquired in step S201 to perform the learning processing of the neural network 81. A known learning method such as a stochastic gradient descent method may be used for the learning processing of the neural network 81.

For example, the control unit 61 inputs the observation information 311 to the input layer of the fully-coupled neural network 811 and inputs the low-resolution captured image 312 to the convolutional layer disposed closest to the input side of the convolutional neural network 812. Then, the control unit 61 performs the ignition determination of each neuron included in each layer in order from the input side. Thereby, the control unit 61 obtains the output value from the output layer of the LSTM network 814. Next, the control unit 61 calculates an error between respective output values acquired from the output layer of the LSTM network 814 and the values respectively corresponding to the gaze state information 321 and the responsiveness information 322 constituting the correct answer data 32A. Subsequently, the control unit 61 uses the calculated error of the output values to calculate each error of the coupling weight between the neurons and the threshold value of each neuron by the method of back propagation through time. Then, the control unit 61 updates the values of the coupling weight between the neurons and the threshold value of each neuron based on each calculated error.

The control unit 61 repeats the series of processing for each set of the data set 3A until the output values output from the neural network 81 match the values respectively corresponding to the gaze state information 321 and the responsiveness information 322. Thereby, the control unit 61 can construct the neural network 81 that outputs the output value corresponding to the correct answer data 32A paired with the input training data 31A when the training data 31A is input.

In addition, the control unit 61 uses the training data 31A included in the data set 3A to perform the unsupervised learning of the autoencoder 82. Here, the encoder of the autoencoder 82 may be the same as the neural network 81 or be a copy of the neural network 81. In the embodiment, the encoder of the autoencoder 82 is the same as the neural network 81. Therefore, the encoder of the autoencoder 82 is constructed by the learning processing of the neural network 81. Therefore, the control unit 61 performs the machine learning of the decoder 820 of the autoencoder 82 so as to output, when the output of the neural network 81 is input, the output values corresponding to the observation information 311 and the low-resolution captured image 312 that are input to the neural network 81 to obtain the output that is input.

The machine learning of the decoder 820 can be performed in the same manner as the neural network 81 by replacing the training data 31A with the output of the neural network 81 and replacing the correct answer data 32A with the training data 31A. That is, the control unit 61 inputs the training data 31A to the neural network 81 and obtains the output from the neural network 81. Next, the control unit 61 inputs the output obtained from the neural network 81 to the first part 821 of the decoder 820, and performs the ignition determination of each neuron included in each layer in order from the input side, thereby obtaining the output value from each of the third part 823 and the fourth part 824. Next, the control unit 61 calculates the errors between the output values obtained from each of the third part 823 and the fourth part 824 and the values corresponding to each of the observation information 311 and the low-resolution captured image 312 of the training data 31A. Next, the control unit 61 uses the calculated errors of the output values to calculate the error of the coupling weight between the neurons and the error of the threshold value of each neuron by the method of back propagation through time. Then, the control unit 61 updates the value of the coupling weight between the neurons and the value of the threshold value of each neuron based on each calculated error. The control unit 61 repeats the series of processing for each of the training data 31A until the output values output from the third part 823 and the fourth part 824 of the decoder 820 match the values respectively corresponding to the observation information 311 and the the low-resolution captured image 312. Thereby, the control unit 61 can construct the decoder 820 that outputs, when the output of the neural network 81 is input, the output value corresponding to the training data 31A input to the neural network 81 to obtain the output that is input.

At this time, the machine learning of the decoder 820 of the autoencoder 82 may be performed in series with the machine learning of the neural network 81, or may be performed separately from the machine learning of the neural network 81. When the machine learning of the autoencoder 82 and the machine learning of the neural network 81 are performed in series, the control unit 61 can construct the learning-finish autoencoder 82 and the learning-finish neural network 81 at the same time. When the machine learning of the neural network 81 and the autoencoder 82 is completed, the control unit 61 advances the processing to the next step S203.

Besides, as described above, the learning processing of the autoencoder is the same as the learning processing of the neural network, and thus may be classified into supervised learning at first glance. However, in the learning processing of the autoencoder, in order to make the input to the encoder and the output from the decoder the same, the training data input to the encoder may also be used as the correct answer data for the output of the decoder. Therefore, the machine learning that also uses the training data as the correct answer data as in the learning processing of the autoencoder is classified into unsupervised learning instead of supervised learning.

(Step S203)

In step S203, the control unit 61 acts as the learning processing unit 612 and stores, in the storage unit 62, information indicating the configuration of the constructed neural network 81, the coupling weight between the neurons, and the threshold value of each neuron as the first learning result data 122. In addition, the control unit 61 stores, in the storage unit 62, information indicating the configuration of the decoder 820 of the constructed autoencoder 82, the coupling weight between the neurons, and the threshold value of each neuron as the second learning result data 123. Thereby, the control unit 61 ends the learning processing of the neural network 81 and the autoencoder 82 according to this action example.

Besides, the control unit 61 may transfer the created learning result data (122, 123) to the automatic driving support device 1A after the processing of the step S203 is completed. In addition, the control unit 61 may update each learning result data (122, 123) by periodically executing the learning processing of the above steps S201 to S203. Then, the control unit 61 may transfer the created learning result data (122, 123) to the automatic driving support device 1A every time the learning processing is executed, and thereby periodically update the learning result data (122, 123) kept by the automatic driving support device 1A. In addition, for example, the control unit 61 may store the created learning result data (122, 123) in a data server such as a NAS. In this case, the automatic driving support device 1A may acquire each learning result data (122, 123) from this data server.

[Characteristic]

As described above, according to this embodiment, the training data 31A acquired in step S201 can be commonly used for both the learning of the neural network 81 and the learning of the autoencoder 82. Therefore, it is possible to prevent the number of the training data 31A used for the machine learning of the neural network 81 from becoming excessively small. In addition, due to the characteristics of the unsupervised learning, it is possible to construct, by the training data 31A used for the learning of the neural network 2A (81), the learning-finish autoencoder 4A (82) capable of evaluating whether the given input data 5A is a type different from the training data 31A. Therefore, in step S201, it is not necessary to assume all types of input data 5A input to the neural network 2A so as to prepare the training data 31A for the learning of the autoencoder 82. Thus, according to the embodiment, in step S 107, the validity of the inference result obtained by the neural network 2A can be appropriately evaluated without reducing the precision of the inference performed by the neural network 2A for estimating the state of the driver D in step S 105.

In addition, when it is evaluated that valid output is able to be obtained from the neural network 2A as an inference result for the input data 5A when the input data 5A is input to the neural network 2A (YES in step S108), the automatic driving support device 1A according to the embodiment executes the action regarding the switching from the automatic driving mode to the manual driving mode based on the driving state information 21A (steps S109 and S110). On the contrary, when it is evaluated that valid output is not able to be obtained from the neural network 2A as an inference result for the input data 5A when the input data 5A is input to the neural network 2A (NO in step S108), the automatic driving support device 1A according to the embodiment stops the execution of the action regarding the switching from the automatic driving mode to the manual driving mode based on the driving state information 21A (steps S109 and S110). Thereby, in the embodiment, the reliability of action control based on the inference result obtained by the neural network 2A can be improved.

In addition, in the embodiment, the neural network 2A acts as the first learner 2 and as the encoder of the autoencoder 4A. In other words, the encoder can be shared between the first learner 2 and the second learner 4. Thereby, it is possible to suppress the total computational cost required for the processing in steps S104 and S106, and to increase the calculation speed in step S106.

In addition, when it is evaluated that valid output is not able to be obtained from the neural network 2A as an inference result for the input data 5A when the input data 5A is input to the neural network 2A, the automatic driving support device 1A according to the embodiment transmits the input data 5A to a predetermined storage location by step S112. Thereby, when the input data 5A is given, which is assumed to be of a type different from the training data 31A prepared when constructing the learned neural network 2A, the input data 5A can be collected as unknown training data 31A. Thereby, the collected input data 5A can be used as new training data, and the range of targets that can be inferred by the neural network 2A in step S105 can be expanded.

§4 Variation example

Although the embodiment of the present invention has been described above in detail, the above description is merely an example of the present invention in all aspects. It is evident that various improvements or variations can be made without departing from the scope of the present invention. For example, the following changes are possible. In addition, in the following, the same constituent elements as the above embodiment are denoted by the same reference signs, and the description of the same points as the above embodiment is omitted appropriately. The following variation examples can be combined appropriately.

<4.1>

The above embodiment shows an example in which the present invention is applied to the automatic driving support device 1A that supports automatic driving of a vehicle. The automatic driving support device 1A is an example of the "evaluation device" of the present invention and also an example of the "action control device". In addition, in the above embodiment, as an example of the predetermined inference performed by the first learner, an example is shown in which the state of the driver D is estimated by the neural network 2A with respect to the input data 5A including the observation information 51 and the low-resolution captured image 52. However, the applicable range of the present invention is not limited to the example of the automatic driving support device 1A. In addition, the predetermined inference performed by the first learner is not limited to the estimation of the state of the driver D as described above, and may be appropriately determined according to the embodiment.

(Diagnostic device)

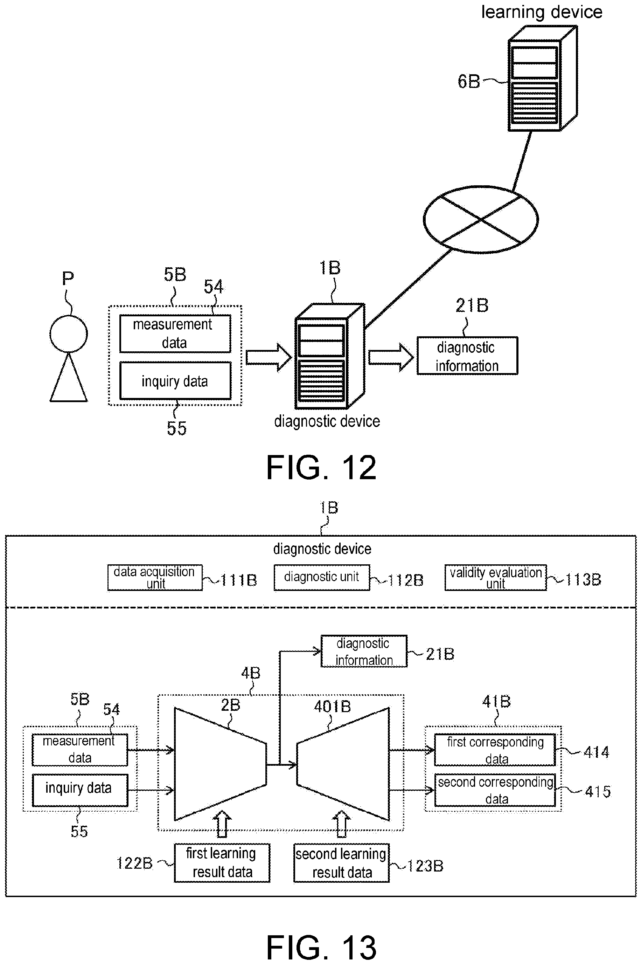

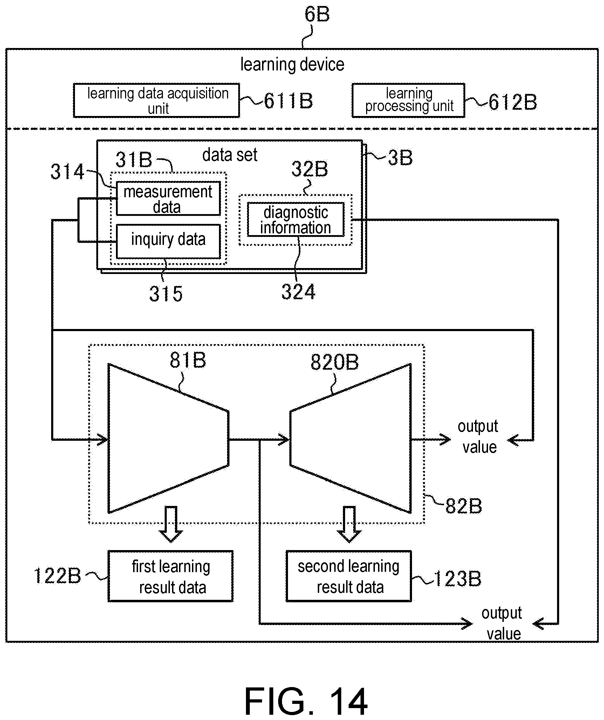

First, as a variation example of the above embodiment, FIGS. 12 to 14 show an example in which the present invention is applied to a diagnostic device 1B for diagnosing a subject P. FIG. 12 schematically illustrates an example of an application scene of the diagnostic device 1B and a learning device 6B according to the variation example. FIG. 13 schematically illustrates an example of the software configuration of the diagnostic device 1B according to the variation example. FIG. 14 schematically illustrates an example of the software configuration of the learning device 6B according to the variation example. In addition, the hardware configurations of the diagnostic device 1B and the learning device 6B according to the variation example may be respectively the same as the hardware configurations of the automatic driving support device 1A and the learning device 6.

As shown in FIG. 13, the control unit of the diagnostic device 1B expands the program stored in the storage unit into the RAM, and interprets and executes the program expanded into the RAM by the CPU. Thereby, the diagnostic device 1B is configured as a computer which includes, as the software modules, a data acquisition unit 111B, a diagnostic unit 112B, and a validity evaluation unit 113B.

Similar to the data acquisition unit 111, the data acquisition unit 111B acquires input data 5B input to a neural network 2B. The neural network 2B is an example of the first learner 2. The input data 5B is an example of the input data 5. In this variation example, the input data 5B includes measurement data 54 and inquiry data 55 obtained from the subject P. The measurement data 54 shows, for example, measurement results of body temperature, blood pressure, pulse, and the like. In addition, the inquiry data 55 shows inquiry results such as the presence or absence of cough and the presence or absence of headache. The measurement data 54 and the inquiry data 55 may be acquired by a known method.

The diagnostic unit 112B diagnoses the health condition of the subject P. Specifically, similar to the state estimation unit 112, the diagnostic unit 112B inputs the input data 5B to the learning-finish neural network 2B and executes calculation processing of the neural network 2B. Thereby, the diagnostic unit 112B performs inference for estimating the health condition of the subject P on the input data 5B, and acquires as a result an output value corresponding to diagnostic information 21B indicating the health condition of the subject P from the neural network 2B. The diagnostic unit 112B is an example of the "inference unit" of the present invention.

Similar to the validity evaluation unit 113, the validity evaluation unit 113B uses an autoencoder 4B to evaluate whether valid output is able to be obtained from the neural network 2B as an inference result. The autoencoder 4B is an example of the second learner 4. Specifically, the validity evaluation unit 113B inputs the output (diagnostic information 21B) obtained from the neural network 2B to a decoder 401B of the autoencoder 4B, and executes calculation processing of the decoder 401B. Thereby, the validity evaluation unit 113B acquires output 41B including first corresponding data 414 corresponding to the measurement data 54 and second corresponding data 415 corresponding to the inquiry data 55 from the autoencoder 4B. Therefore, the validity evaluation unit 113B compares the input data 5B and the output 41B and thereby evaluates the validity of the inference result obtained by the neural network 2B.

Thereby, the diagnostic device 1B can perform the inference for estimating the health condition of the subject P by the neural network 2B on the given measurement data 54 and inquiry data 55, and use the autoencoder 4B to evaluate the validity of the inference result obtained by the neural network 2B. Besides, the neural network 2 B is set based on first learning result data 122B. The decoder 401B of the autoencoder 4B is set based on second learning result data 123B.

In addition, as shown in FIG. 14, the control unit of the learning device 6B expands the program stored in the storage unit into the RAM, and interprets and executes the program expanded into the RAM by the CPU. Thereby, the learning device 6B is configured as a computer which includes, as the software modules, a learning data acquisition unit 611B and a learning processing unit 612B.

The learning data acquisition unit 611B acquires a data set 3B used for machine learning. The data set 3B includes a pair of training data 31B and correct answer data 32B. The training data 31B is an example of the training data 31, and the correct answer data 32B is an example of the correct answer data 32. In the embodiment, the training data 31B includes measurement data 314 and inquiry data 315. The measurement data 314 corresponds to the measurement data 54, and the inquiry data 315 corresponds to the inquiry data 55. On the other hand, the correct answer data 32B includes diagnostic information 324 so as to indicate the correct answer of an estimation result of the health condition of the subject with respect to the training data 31B. The diagnostic information 324 corresponds to the diagnostic information 21B.

The learning data acquisition unit 611B may acquire the data set 3B including the training data 31B and the correct answer data 32B by the same processing as the above step S201. For example, the learning data acquisition unit 611B acquires the measurement data 314 and the inquiry data 315 from the subjects P in various health conditions. Then, the learning data acquisition unit 611B associates the acquired measurement data 314 and inquiry data 315 with the diagnostic information 324 indicating the health condition of the subject P. Thereby, the learning data acquisition unit 611B can acquire the data set 3B including the training data 31B and the correct answer data 32B.

When the learning processing unit 612B trains the neural network 81B to output the output value corresponding to the diagnostic information 324 when the measurement data 314 and the inquiry data 315 are input. In addition, when the output of the neural network 81B is input, the learning processing unit 612B trains a decoder 820B of an autoencoder 82B to output the output values respectively corresponding to the measurement data 314 and the inquiry data 315. The neural network 81B corresponds to the neural network 2B, the autoencoder 82B corresponds to the autoencoder 4B, and the decoder 820B corresponds to the decoder 401B.

Then, the learning processing unit 612B stores, in the storage unit, information indicating the configuration of the constructed neural network 81B, the coupling weight between the neurons, and the threshold value of each neuron as the first learning result data 122B. In addition, the learning processing unit 612B stores, in the storage unit, information indicating the configuration of the decoder 820B of the constructed autoencoder 82B, the coupling weight between the neurons, and the threshold value of each neuron as the second learning result data 123B. Thereby, the learning device 6B can generate the learning-finish neural network 2B and the autoencoder 4B which are used in the diagnostic device 1B.

(Prediction device)

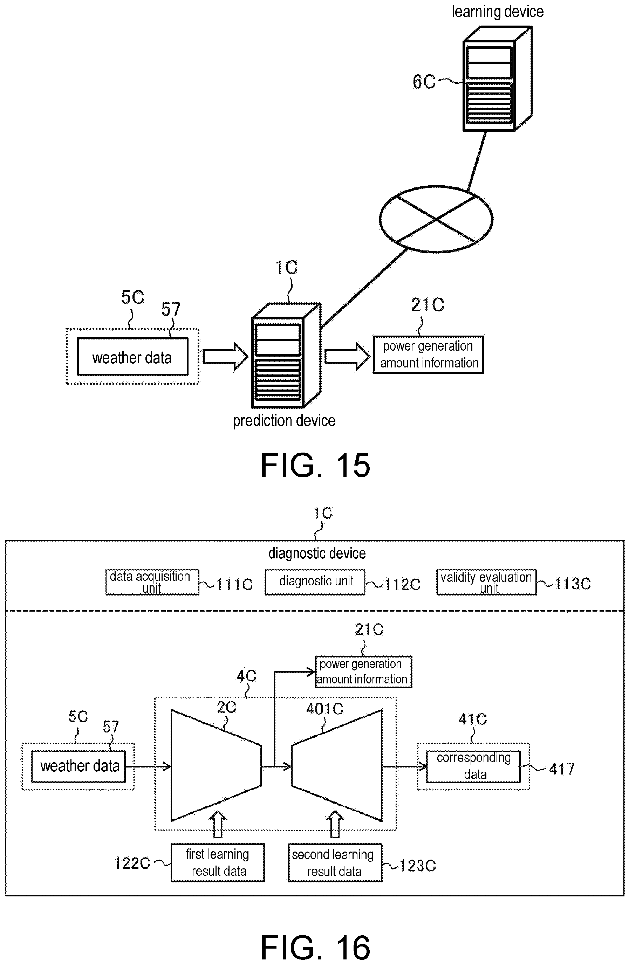

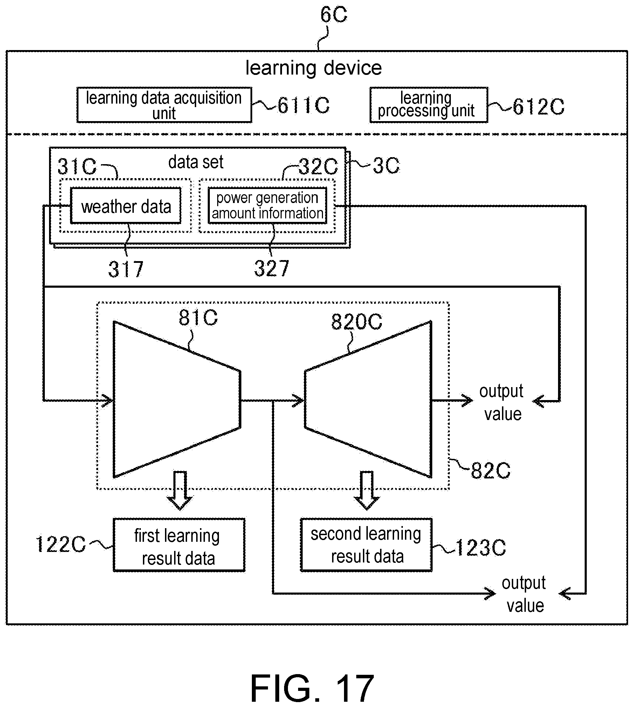

Next, as a variation example of the above embodiment, FIGS. 15 to 17 show an example in which the present invention is applied to a prediction device 1C that predicts the amount of power generation in a power plant such as a solar power plant. FIG. 15 schematically illustrates an example of an application scene of the prediction device 1C and a learning device 6C according to the variation example. FIG. 16 schematically illustrates an example of the software configuration of the prediction device 1C according to the variation example. FIG. 17 schematically illustrates an example of the software configuration of the learning device 6C according to the variation example. In addition, the hardware configurations of the prediction device 1C and the learning device 6C according to the variation example are respectively the same as the hardware configurations of the automatic driving support device 1A and the learning device 6.

As shown in FIG. 16, the control unit of the prediction device 1C expands the program stored in the storage unit into the RAM, and interprets and executes the program expanded into the RAM by the CPU. Thereby, the diagnostic device 1B is configured as a computer which includes, as the software modules, a data acquisition unit 111C, a power generation amount prediction unit 112C, and a validity evaluation unit 113C.

Similar to the data acquisition unit 111, the data acquisition unit 111C acquires input data 5C input to a neural network 2C. The neural network 2C is an example of the second learner 2. The input data 5C is an example of the input data 5. In the variation example, the input data 5C includes weather data 57. The weather data 57 indicates the weather on the day when the power generation amount is predicted. The weather data 57 may be acquired from, for example, a known website and the like that provide weather forecast information.

The power generation amount prediction unit 112C predicts the power generation amount at the target power plant. Specifically, similar to the state estimation unit 112, the power generation amount prediction unit 112C inputs the input data 5C to the learning-finish neural network 2C and executes calculation processing of the neural network 2C. Thereby, the power generation amount prediction unit 112C performs an inference for predicting the power generation amount on the input data 5C, and acquires as a result the output value corresponding to power generation amount information 21C indicating the predicted value of the target power generation amount from the neural network 2C. The power generation amount prediction unit 112C is an example of the "inference unit" of the present invention.

Similar to the validity evaluation unit 113, the validity evaluation unit 113C uses an autoencoder 4C to evaluate whether valid output is able to be obtained from the neural network 2C as an inference result. The autoencoder 4C is an example of the second learner. Specifically, the validity evaluation unit 113C inputs the output (power generation amount information 21C) obtained from the neural network 2C to a decoder 401C of the autoencoder 4C, and executes calculation processing of the decoder 401C. Thereby, the validity evaluation unit 113C acquires output 41C including corresponding data 417 corresponding to the weather data 57 from the autoencoder 4C. Therefore, the validity evaluation unit 113C compares the input data 5C and the output 41C, and thereby evaluates the validity of the inference result obtained by the neural network 2C.

Thereby, the prediction device 1C can perform the inference for predicting the power generation amount by the neural network 2C on the given weather data 57, and use the autoencoder 4C to evaluate the validity of the inference result obtained by the neural network 2C. The neural network 2C is set based on first learning result data 122C. The decoder 401C of the autoencoder 4C is set based on second learning result data 123C.

In addition, as shown in FIG. 17, the control unit of the learning device 6C expands the program stored in the storage unit into the RAM, and interprets and executes the program expanded into the RAM by the CPU. Thereby, the learning device 6C is configured as a computer which includes, as the software modules, a learning data acquisition unit 611C and a learning processing unit 612C.

The learning data acquisition unit 611C acquires a data set 3C used for machine learning. The data set 3C includes a pair of training data 31C and correct answer data 32C. The training data 31C is an example of the training data 31, and the correct answer data 32C is an example of the correct answer data 32. In the embodiment, the training data 31C includes weather data 317. The weather data 317 corresponds to the above weather data 57. On the other hand, the correct answer data 32C includes power generation amount information 327 so as to indicate the correct answer of the prediction result of the power generation amount with respect to the training data 31C. The power generation amount information 327 corresponds to the power generation amount information 21C.

The learning data acquisition unit 611C acquires the data set 3C including the training data 31C and the correct answer data 32C by the same processing as the above step S201. For example, the learning data acquisition unit 611C acquires the weather data 317 from a predetermined website, and acquires the power generation amount information 327 indicating the power generation amount on the day when the weather is indicated by the weather data 317. The power generation amount information 327 may be acquired from a known website or may be input by an operator. Then, the learning data acquisition unit 611C associates the acquired weather data 317 with the power generation amount information 327. Thereby, the learning data acquisition unit 611C can acquire the data set 3C including the training data 31C and the correct answer data 32C.

The learning processing unit 612C trains a neural network 81C to output the output value corresponding to the power generation amount information 327 when the weather data 317 is input. In addition, the learning processing unit 612C trains a decoder 820C of an autoencoder 82C to output the output value corresponding to the weather data 317 when the output of the neural network 81C is input. The neural network 81C corresponds to the neural network 2C, the autoencoder 82C corresponds to the autoencoder 4C, and the decoder 820C corresponds to the decoder 401C.

Then, the learning processing unit 612C stores, in the storage unit, information indicating the configuration of the constructed neural network 81C, the coupling weight between the neurons, and the threshold value of each neuron as the first learning result data 122C. In addition, the learning processing unit 612C stores, in the storage unit, information indicating the configuration of the decoder 820C of the constructed autoencoder 82C, the coupling weight between the neurons, and the threshold value of each neuron as the second learning result data 123C. Thereby, the learning device 6C can generate the learning-finish neural network 2C and the autoencoder 4C which are used in the prediction device 1C.

(Others)

As described above, the present invention can be applied to various fields in which supervised learning is used. The type of the predetermined inference performed by the first learner may be appropriately determined according to the field to which the present invention is applied. That is, various inference units may be configured according to the field to which the present invention is applied.

In the above embodiment, as an example of the "predetermined action based on the result of inference" performed by the action execution unit of the present invention, the action (steps S109 and S110) regarding the switching from the automatic driving mode to the manual driving mode based on the driving state information 21A is illustrated. However, the "predetermined action based on the result of inference" is not limited to this example, and may be appropriately determined according to the field to which the present invention is applied. The action execution unit may be configured to control in the following manner, that is, when it is evaluated that valid output is able to be obtained from the first learner as an inference result for the input data when the input data is input to the first learner, the action execution unit controls the execution of a predetermined action based on the inference result, and when it is evaluated that valid output is not able to be obtained from the first learner as an inference result for the input data, the action execution unit stops the execution of the predetermined action based on the inference result.

Besides, "stopping the execution of the predetermined action" may include all forms in which the execution of the predetermined action is not maintained. That is, "stopping the execution of the predetermined action" may include completely stopping the predetermined action and changing attributes of the predetermined action such as speed, acceleration, and force. In addition, the device that executes the predetermined action may be the action control device including the action execution unit, or may be a separate device different from the action control device. When a separate device executes the predetermined action, the action control device controls the execution of the predetermined action by transmitting the command to the separate device. In this case, the inference unit may be present in the separate device instead of the action control device.

<4.2>

In the above embodiment, the automatic driving support device 1A holds the neural network 2A and the autoencoder 4A. However, the configuration of the automatic driving support device 1A is not limited to this example and may be appropriately selected according to the embodiment. For example, at least one of the neural network 2A and the autoencoder 4A may be held in an external device other than the automatic driving support device 1A.

When the neural network 2A is held in an external device, a series of processing regarding the inference performed by the neural network 2A may be executed by the external device. In this case, the series of processing regarding the inference performed by the neural network 2A may be omitted from the processing procedure of the automatic driving support device 1A. In addition, the state estimation unit 112 may be omitted.

In addition, when the decoder 401 of the autoencoder 4A is held in an external device, the processing of step S106 may be executed by the learning device. In this case, the processing of step S106 may be omitted from the processing procedure of the automatic driving support device 1A. The control unit 11 may transmit the input data 5A acquired in step S103 or the output of the neural network 2A to an external device, and thereby request the external device for the calculation processing of the decoder 401. Then, the control unit 11 may acquire the output 41A of the autoencoder 4A from the external device as a calculation result obtained by the external device.

Furthermore, in any one of a case in which the neural network 2A is held in the automatic driving support device 1A and a case in which the neural network 2A is held in an external device, the automatic driving support device 1A may execute the processing of steps S106 and S107 regardless of whether a series of processing regarding the inference performed by the neural network 2A is executed. Thereby, before the inference performed by the neural network 2A is executed, the automatic driving support device 1A may evaluate whether valid output is able to be obtained from the neural network 2A as an inference result for the input data 5A when the input data 5A is input to the neural network 2A.

<4.3>

In the above embodiment, the first learner 2 is configured by a neural network, and the second learner 4 is configured by an autoencoder. However, the type of each learner (2, 4) is not limited to this example and may be appropriately selected according to the embodiment. For example, the first learner 2 may be configured by a linear regression model, a support vector machine, or the like. In addition, for example, the second learner 4 may be configured by a calculation model for calculating a Mahalanobis distance, a one-class support vector machine, or the like.

For example, the first learner 2 may be configured by a linear regression model. In this case, the second learner 4 may be configured by a calculation model for calculating a Mahalanobis distance. When the input is set as x, the output is set as y, and the parameter is set as θ, the first learner 2 (linear regression model) can be expressed by the following Equation 1.

[Equation 1]

$$y = x\theta$$

According to the first learner 2, a predetermined inference result (y) to the input data 5 can be obtained by inputting the input data 5 to x. The parameter θ for estimating the output y from the input x can be calculated by the following Equation 2.

[Equation 2]

$$\theta = (X^T X)^{-1} X^T y$$

Therefore, in the relational expression of Equation 2, the parameter θ can be calculated by inputting the training data 31 to the input X and the correct answer data 32 to the output y. The processing for calculating the parameter θ is an example of the supervised learning processing of the first learner 2.

On the other hand, a calculation model d(x) for calculating a Mahalanobis distance can be defined by the following Equation 3.

[Equation 3]

$$d(x) = \sqrt{(x-\mu)^T \sum{}^{-1} (x-\mu)}$$

Therefore, the calculation model for calculating a Mahalanobis distance can be derived by calculating an average value μ of the training data 31. The processing of deriving the calculation model for calculating a Mahalanobis distance is an example of the unsupervised learning processing of the second learner 4.

At this time, the evaluation device 1 can evaluate, based on the output (d(x)) of the second learner 4, the validity of the inference result (y) obtained by the first learner 2 with respect to the input data 5. For example, the evaluation device 1 may express the degree of validity of the inference result obtained by the first learner 2 with respect to the input data 5 by v(x) shown in the following Equation 4.

[Equation 4]

$$v(x) = \exp(-d(x))$$

The more the input data 5 is similar to the training data 31, the more the value of v(x) approaches 1, and the more the input data 5 deviates from the training data 31, the more the value of v(x) approaches 0. Therefore, the evaluation device 1 may compare the value of v(x) with a predetermined threshold value and thereby evaluate the validity of the inference result obtained by the first learner 2 with respect to the input data 5. That is, when the value of v(x) is greater than or equal to the predetermined threshold value, the evaluation device 1 may evaluate that the validity of the inference result obtained by the first learner 2 with respect to the input data 5 is high. In addition, when the value of v(x) is less than the predetermined threshold value, the evaluation device 1 may evaluate that the validity of the inference result obtained by the first learner 2 with respect to the input data 5 is low. Besides, the predetermined threshold value may be set appropriately according to the embodiment.

In addition, for example, the first learner 2 may be configured by a support vector machine. In this case, the second learner 4 may be configured by a one-class support vector machine. Supervised learning of the support vector machine may be performed by a known method. At this time, a one-class support vector machine Sa(x) to the training data 31 of each class can be expressed by the following Equation 5. In addition, a one-class support vector machine Sb(x) to all the training data 31 can be expressed by the following Equation 6. Any one-class support vector machine may be employed as the second learner 4.

[Equation 5]

$$Sa(x) = \max_i \left( w_i^T \varphi(x) + b_i \right)$$

[Equation 6]

$$Sb(x) = w^T \varphi(x) + b$$

φ indicates a kernel function. wi, w, bi, and b are parameters obtained by learning. The processing of deriving any one-class support vector machine is an example of the unsupervised learning processing of the second learner 4.

The more the input data 5 is similar to the training data 31, the more the values of Sa(x) and Sb(x) approach 1, and the more the input data 5 deviates from the training data 31, the more the values of Sa(x) and Sb(x) approach -1. Therefore, the evaluation device 1 may compare the value obtained by inputting the input data 5 to x of any one-class support vector machine with a predetermined threshold value, and thereby evaluate the validity of the inference result obtained by the first learner 2 with respect to the input data 5. That is, when the value obtained from the one-class support vector machine is greater than or equal to the predetermined threshold value, the evaluation device 1 may evaluate that the validity of the inference result obtained by the first learner 2 with respect to the input data 5 is high. In addition, when the value obtained from the one-class support vector machine is less than the predetermined threshold value, the evaluation device 1 may evaluate that the validity of the inference result obtained by the first learner 2 with respect to the input data 5 is low. Besides, the predetermined threshold value may be set appropriately according to the embodiment.

<4.4>

In the above embodiment, the processing of at least one of steps Sill and S112 may be omitted. Accordingly, at least one of the first warning unit 114 and the data transmission unit 117 may be omitted in the software configuration of the automatic driving support device 1A. When steps S111 and S112 are omitted, step S108 may be omitted.

In the above embodiment, the processing of steps S109 and S113 may be omitted. Accordingly, the second warning unit 115 may be omitted in the software configuration of the automatic driving support device 1A.

In the above embodiment, an example in which the present invention is applied to a vehicle capable of performing automatic driving has been shown. However, the vehicle to which the present invention is applicable is not limited to this example, and the present invention may be applied to a vehicle that does not perform automatic driving. In this case, the processing of steps S101, S102 and S110 may be omitted. In addition, the driving control unit 116 may be omitted.

<4.5>

In the above embodiment, the gaze state information 211 indicates whether the driver D is paying sufficient attention to driving on two levels, and the responsiveness information 212 indicates whether the responsiveness to driving is low or high on two levels. However, the expression forms of the gaze state information 211 and the responsiveness information 212 are not limited to this example. The gaze state information 211 may indicate whether the driver D is paying sufficient attention to driving on three or more levels, and the responsiveness information 212 may indicate whether the responsiveness to driving is high or low on three or more levels.

In this case, in step S109, the control unit 11 may determine whether the driver D is in the state suitable for driving the vehicle based on score values of the gaze state information and the responsiveness information. For example, the control unit 11 may determine whether the driver D is in the state suitable for driving the vehicle based on whether the score value of the gaze state information is higher than a predetermined threshold value. In addition, for example, the control unit 11 may determine whether the driver D is in the state suitable for driving the vehicle based on whether the score value of the responsiveness information is higher than a predetermined threshold value. In addition, for example, the control unit 11 may determine whether the driver D is in the state suitable for driving the vehicle based on whether the total value of the score value of the gaze state information and the score value of the responsiveness information is higher than a predetermined threshold value. At this time, the threshold value may be set appropriately. Furthermore, in the above step S113, the control unit 11 may change the warning content according to the score value of each of the gaze state information and the responsiveness information.

In addition, in the above embodiment, the driving state information 21A output from the neural network 2A includes the gaze state information 211 and the responsiveness information 212. However, the content of the driving state information 21A is not limited to this example and may be set appropriately according to the embodiment. For example, any one of the gaze state information 211 and the responsiveness information 212 may be omitted. In addition, for example, the driving state information 21A may include information other than the gaze state information 211 and the responsiveness information 212. As a specific example, the driving state information 21A may include information indicating whether the driver D is in the driver seat, information indicating whether the hands of the driver D are placed on the steering wheel, information indicating whether the foot of the driver D is placed on the pedal, information indicating the degree of concentration of the driver D in driving, information indicating the behavioral state of the driver D, and the like.

<4.6>

In the above embodiment, in step S104, the low-resolution captured image 52 is used as the input of the neural network 2A, instead of directly using the captured image 711. Thereby, the computational amount of the calculation processing of the neural network 2A in step S104 can be reduced. Similarly, in step S202, the computational amount of the learning processing of the neural network 81 can be reduced. Consequently, according to the above embodiment, it is possible to reduce the load on each control unit (11, 61) (processor) in steps S104 and S202. However, the captured image input to each neural network (2A, 81) is not limited to this example. The captured image obtained from the camera 71 may be directly input to each neural network (2A, 81). Besides, the resolution of the low-resolution captured image (52, 312) is preferably at such a degree that the characteristics of the driver posture can be extracted although the facial behavior of the driver cannot be discriminated.

<4.7>

In the above embodiment, as shown in FIG. 7A, the learning-finish neural network 2A used in the inference for estimating the state of the driver D includes the fully-coupled neural network 25, the convolutional neural network 26, the coupling layer 27 and the LSTM network 28. However, the configuration of the learning-finish neural network 2A is not limited to this example and may be appropriately determined according to the embodiment. For example, the LSTM network 28 may be omitted. The same applies to the neural network 81. In addition, the configuration of each autoencoder (4A, 82) may also be appropriately determined according to the embodiment. The encoder of each autoencoder (4A, 82) may be configured by a neural network different from the neural network (2A, 81).

<4.8>

In the above embodiment, the neural network is used as the first learner used for estimating the state of the driver D. In addition, the autoencoder is used as the second learner for evaluating the validity of the inference result obtained by the first learner. However, the type of each learner is not limited to this example and may be appropriately selected according to the embodiment. As long as the observation information 51 and the low-resolution captured image 52 can be used as inputs, the first learner may be configured by a learning model other than the neural network. In addition, the second learner may be configured by a learning model other than the autoencoder.

<4.9>

In the above embodiment, the control unit 11 inputs the observation information 51 and the low-resolution captured image 52 to the neural network 2A in step S104. However, the input of the neural network 2A is not limited to this example and may be appropriately selected according to the embodiment. For example, information other than the observation information 51 and the low-resolution captured image 52 may be input to the neural network 2A. In addition, for example, any one of the observation information 51 and the low-resolution captured image 52 may be omitted. In addition, for example, in the observation information 51, the biometric information 721 may be omitted. In this case, the biometric sensor 72 may be omitted.

<4.10>

In addition, in the above embodiment, each learning result data (122, 123) includes the information indicating the configurations of the neural network 2A and the decoder 401 of the autoencoder 4A. However, the configuration of each learning result data (122, 123) is not limited to this example. For example, when the configurations of the neural network and the autoencoder that are used are common in each device, each learning result data (122, 123) may not include the information indicating the configurations of the neural network 2A and the decoder 401 of the autoencoder 4A.

<4.11>

In addition, in the above embodiment, the neural network 2A is used to estimate the state of the driver D when an instruction of switching from the automatic driving mode to the manual driving mode is given. However, the monitoring on the driver D may be performed not only at this timing but also at other timing. For example, while the vehicle is traveling in the automatic driving mode, the driver D may be monitored regardless of the instruction of switching to the manual driving mode.

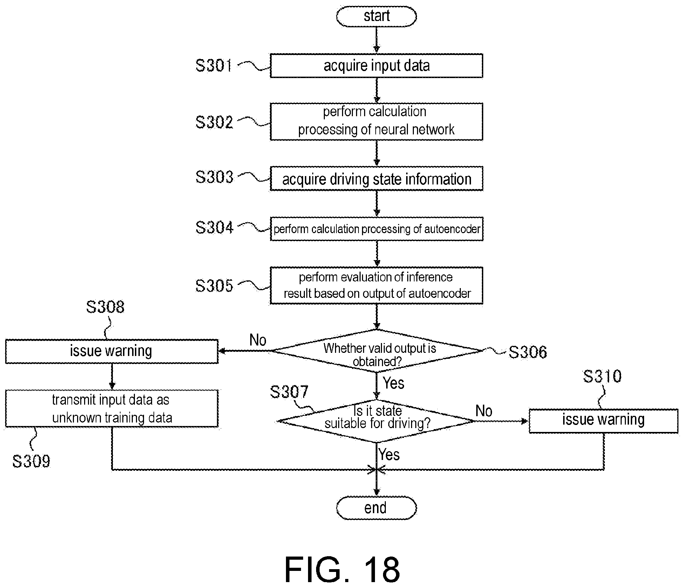

FIG. 18 is a flow chart illustrating an example of the processing procedure of the automatic driving support device 1A according to the variation example. The control unit 11 starts the automatic driving mode in step S101, and then starts the processing from step S301. Besides, the processing of steps S301 to S307 is the same as the processing of steps S103 to S109. The processing of steps S308 to S310 is the same as the processing of steps S111 to S113. Thereby, while the vehicle is traveling in the automatic driving mode, the automatic driving support device 1A can monitor the state of the driver D and evaluate the content of the monitoring (that is, the inference performed by the neural network 2A).

<4.12>

In the above embodiment, the second encoder of the second learner 4 (autoencoder 4A) is the same as the first encoder (neural network 2A) of the first learner 2, or is a copy of the first encoder (neural network 2A) of the first learner 2. However, the second encoder of the second learner 4 may be different from the first encoder of the first learner 2. In addition, each encoder and decoder is not limited to the example of the above embodiment. Each encoder may be appropriately constructed to encode the input data, and the decoder may be appropriately constructed to decode the output of the second encoder.

[Reference Signs List]

| 1  | evaluation device |
| 2  | first learner |
| 21 | output |
| 3  | data set |
| 31 | training data |
| 32 | correct answer data |
| 4  | second learner |
| 41 | output |
| 5  | input data |

| 1A  | automatic driving support device |
| 11  | control unit |
| 12  | storage unit |
| 13  | external interface |
| 111 | data acquisition unit |
| 112 | state estimation unit (inference unit) |
| 113 | validity evaluation unit |
| 114 | first warning unit (warning unit) |
| 115 | second warning unit |
| 116 | driving control unit (action execution unit) |
| 117 | data transmission unit |
| 121 | program (evaluation program) |
| 122 | first learning result data |
| 123 | second learning result data |
| 2A  | neural network |
| 21A | output |
| 211 | gaze state information |
| 212 | responsiveness information |
| 25  | fully-coupled neural network |
| 251 | input layer |
| 252 | intermediate layer (hidden layer) |
| 253 | output layer |
| 26  | convolutional neural network |
| 261 | convolutional layer |
| 262 | pooling layer |
| 263 | fully-coupled layer |
| 264 | output layer |
| 27  | coupling layer |
| 28  | LSTM network (recurrent neural network) |
| 281 | input layer |
| 282 | LSTM block |
| 283 | output layer |
| 3A  | data set |
| 31A | training data |
| 311 | observation information |
| 312 | low-resolution captured image |
| 32A | correct answer data |
| 321 | gaze state information |
| 322 | responsiveness information |
| 4A  | autoencoder |
| 401 | decoder |
| 41A | output |
| 411 | corresponding information |
| 412 | corresponding image |
| 45  | first part |
| 46  | second part |
| 47  | third part |
| 48  | fourth part |
| 5A  | input data |
| 51  | observation information |
| 52  | low-resolution captured image (image data) |
| 6   | learning device |
| 61  | control unit |
| 62  | storage unit |
| 63  | communication interface |
| 64  | input device |
| 65  | output device |
| 66  | drive |

| | |
|---|---|
| 611 | learning data acquisition unit |
| 612 | learning processing unit |
| 621 | learning program |
| 70 | navigation device |
| 71 | camera |
| 711 | captured image |
| 712 | facial behavior information |
| 72 | biometric sensor |
| 721 | biometric information |
| 73 | speaker |
| 81 | neural network |
| 811 | fully-coupled neural network |
| 812 | convolutional neural network |
| 813 | coupling layer |
| 814 | LSTM network |
| 82 | autoencoder |
| 820 | decoder |
| 821 | first part |
| 822 | second part |
| 823 | third part |
| 824 | fourth part |
| 92 | storage medium |
| 1B | diagnostic device |
| 111B | data acquisition unit |
| 112B | diagnostic unit |
| 113B | validity evaluation unit |
| 122B | first learning result data |
| 123B | second learning result data |
| 2B | neural network |
| 21B | diagnostic information (output) |
| 3B | data set |
| 31B | training data |
| 314 | measurement data |
| 315 | inquiry data |
| 32B | correct answer data |
| 324 | diagnostic information |
| 4B | autoencoder |
| 401B | decoder |
| 41B | output |
| 414 | first corresponding data |
| 415 | second corresponding data |
| 5B | input data |
| 54 | measurement data |
| 55 | inquiry data |
| 6B | learning device |
| 611B | learning data acquisition unit |
| 612B | learning processing unit |
| 81B | neural network |
| 82B | autoencoder |
| 820B | decoder |
| 1C | prediction device |
| 111C | data acquisition unit |
| 112C | power generation amount prediction unit |
| 113C | validity evaluation unit |
| 122C | first learning result data |
| 123C | second learning result data |
| 2C | neural network |
| 21C | power generation amount information (output) |

| | |
|---|---|
| 3C | data set |
| 31C | training data |
| 317 | weather data |
| 32C | correct answer data |
| 327 | power generation amount information |
| 4C | autoencoder |
| 401C | decoder |
| 41C | output |
| 417 | corresponding data |
| 5C | input data |
| 57 | weather data |
| 6C | learning device |
| 611C | learning data acquisition unit |
| 612C | learning processing unit |
| 81C | neural network |
| 82C | autoencoder |
| 820C | decoder |

**Claims**

1. An evaluation device, comprising:

   a data acquisition unit which acquires input data input to a first learner of finishing learning that has undergone supervised learning using a data set including a pair of training data and correct answer data that indicates the correct answer of an inference result to the training data; and
   a validity evaluation unit which evaluates, based on an output obtained from a second learner of finishing learning that has undergone unsupervised learning using the training data by inputting the input data to the second learner, whether a valid output is able to be obtained from the first learner as an inference result to the input data when the input data is input to the first learner.

2. The evaluation device according to claim 1, wherein the validity evaluation unit compares the output obtained from the second learner with a predetermined threshold value, and thereby determines whether the valid output is able to be obtained from the first learner as the inference result to the input data when the input data is input to the first learner.

3. The evaluation device according to claim 1, wherein the validity evaluation unit outputs, as an evaluation result, an evaluation value indicating a degree at which the valid output is able to be obtained from the first learner as the inference result to the input data when the input data is input to the first learner.

4. The evaluation device according to any one of claims 1 to 3, further comprising a warning unit which issues, when the validity evaluation unit evaluates that the valid output is not able to be obtained from the first learner as the inference result to the input data when the input data is input to the first learner, a warning regarding the output that is obtained from the first learner as the inference result to the input data by inputting the input data to the first learner.

5. The evaluation device according to any one of claims 1 to 4, further comprising an inference unit which performs a predetermined inference on the input data by inputting the input data to the first learner and obtaining the output from the first learner.

6. The evaluation device according to claim 5, further comprising an action execution unit,
   wherein, when the validity evaluation unit evaluates that the valid output is able to be obtained from the first learner as the inference result to the input data when the input data is input to the first learner, the action execution unit executes a predetermined action based on the inference result; when the validity evaluation unit evaluates that the valid output is not able to be obtained from the first learner as the inference result to the input data when the input data is input to the first learner, the action execution unit stops executing the predetermined action based on the inference result.

7. The evaluation device according to any one of claims 1 to 6,
   wherein the input data comprises image data that is captured of a driver sitting in a driver seat of a vehicle, and
   the output obtained from the first learner by inputting the input data to the first learner comprises information indicating state of the driver.

8. The evaluation device according to any one of claims 1 to 7, further comprising a data transmission unit which transmits, when the validity evaluation unit evaluates that the valid output is not able to be obtained from the first learner as the inference result to the input data when the input data is input to the first learner, the input data to a predetermined storage location.

9. The evaluation device according to any one of claims 1 to 8,
   wherein the first learner comprises a first encoder that encodes the input data, and
   the second learner comprises a second encoder that encodes the input data and a decoder that decodes an output of the second encoder.

10. The evaluation device according to claim 9,
    wherein the first encoder and the second encoder are the same.

11. The evaluation device according to claim 9,

wherein the first encoder is constructed to output, when the training data is input, a value corresponding to the correct answer data paired with the input training data,
the second encoder is the same as the first encoder or a copy of the first encoder, and
the decoder is constructed to output, when the output of the first encoder is input, a value corresponding to the training data input to the first encoder so as to obtain the output that is input.

12. An action control device, comprising:

   a data acquisition unit which acquires input data input to a first learner of finishing learning that has undergone supervised learning using a data set including a pair of training data and correct answer data that indicates the correct answer of an inference result to the training data;
   a validity evaluation unit which evaluates, based on an output obtained from a second learner of finishing learning that has undergone unsupervised learning using the training data by inputting the input data to the second learner, whether a valid output is able to be obtained from the first learner as an inference result to the input data when the input data is input to the first learner; and
   an action execution unit, wherein when the validity evaluation unit evaluates that the valid output is abled to be obtained from the first learner as the inference result to the input data when the input data is input to the first learner, the action execution unit controls an execution of a predetermined action based on a result of a predetermined inference performed on the input data by inputting the input data to the first learner and obtaining an output from the first learner; when the validity evaluation unit evaluates that the valid output is not able to be obtained from the first learner as the inference result to the input data when the input data is input to the first learner, the action execution unit stops the execution of the predetermined action based on the result of the inference.

13. An evaluation method, in which a computer executes:

   a step for acquiring input data input to a first learner of finishing learning that has undergone supervised learning using a data set including a pair of training data and correct answer data that indicates the correct answer of an inference result to the training data; and
   a step for evaluating, based on an output obtained from a second learner of finishing learning that has undergone unsupervised learning using the training data by inputting the input data to the second learner, whether a valid output is able to be obtained from the first learner as an inference result to the input data when the input data is input to the first learner.

14. An evaluation program for causing a computer to execute:

a step for acquiring input data input to a first learner of finishing learning that has undergone supervised learning using a data set including a pair of training data and correct answer data that indicates the correct answer of an inference result to the training data; and

a step for evaluating, based on an output obtained from a second learner of finishing learning that has undergone unsupervised learning using the training data by inputting the input data to the second learner, whether a valid output is able to be obtained from the first learner as an inference result to the input data when the input data is input to the first learner.

FIG. 1

FIG. 2

1A 11

automatic driving support device

map information
GPS information
surrounding
information

12 storage unit

control unit

CPU

RAM

ROM

navigation device 70

121 program

captured image

camera 71

122 first learning
result data

123 second learning
result data

external
I/F

biometric
information

biometric
sensor 72

13

speaker 73

FIG. 3

6

learning device

62 storage unit

control unit

621 learning program

CPU

RAM

ROM

61

3A data set

122 first learning
result data

123 second learning
result data

communi-
cation
I/F

63

92

input device 64

output device 65

storage medium

drive

66

FIG. 4

1A

automatic driving support device

data acquisition unit ~111    state estimation unit ~112    validity evaluation unit ~113

first warning unit ~114    second warning unit ~115    driving control unit ~116    data transmission unit ~117

721
biometric information

711                    712
captured image    →    facial behavior information

21A
driving state information
gaze state information ~211
responsiveness information ~212

4A

51
observation information

2A        401

low-resolution captured image

corresponding information ~411

corresponding image ~412

5A    52                                    41A

122~ first learning result data        second learning result data ~123

## FIG. 5

211

| gaze | no gaze |
|------|---------|
| forward gaze<br>instrument check<br>navigation check<br><br>smoking<br>eating and drinking<br>calling | looking aside<br>looking back<br>sleepiness<br><br>dozing<br>mobile phone operation<br>panic |

## FIG. 6A

212

| state of high responsiveness | state of low responsiveness |
|---|---|
| forward gaze<br>instrument check<br>navigation check<br><br>looking aside<br>looking back<br>sleepiness | smoking<br>eating and drinking<br>calling<br><br>dozing<br>mobile phone operation<br>panic |

# FIG. 6B

# FIG. 7A

FIG. 7B

FIG. 8

FIG. 9A

FIG. 9B

start

S101 — start automatic driving mode

S102 — Whether there is instruction for switching from automatic driving mode to manual driving mode?

No

Yes

B → ← C

S103 — acquire input data

S104 — perform calculation processing of neural network

S105 — acquire driving state information

S106 — perform calculation processing of autoencoder

S107 — perform evaluation of inference result based on output of autoencoder

A

# FIG. 10A

S111

issue warning

No ← Whether valid output is obtained? ~ S108

Yes

S109

Is it state suitable for driving? — No → S113

issue warning

transmit input data as unknown training data

S112

C

Yes

S110 ~ start manual driving mode

B

end

FIG. 10B

start

S201 ~ acquire data set used for machine learning

S202 ~ perform learning processing of neural network and autoencoder

S203 ~ store learning result data

end

FIG. 11

learning device

6B

P

5B  54

measurement data

inquiry data

55

1B

21B

diagnostic information

diagnostic device

# FIG. 12

1B

diagnostic device

| data acquisition unit | ~111B | diagnostic unit | ~112B | validity evaluation unit | ~113B |

diagnostic information  ~21B

4B

5B  54

2B  401B

41B

measurement data

inquiry data

first corresponding data  ~414

second corresponding data  ~415

55

122B~ first learning result data

second learning result data ~123B

# FIG. 13

FIG. 14

learning device

6C

1C

5C 57

weather data

power generation
amount information

21C

prediction device

# FIG. 15

1C

diagnostic device

| data acquisition unit | ~111C | diagnostic unit | ~112C | validity evaluation unit | ~113C |

power generation
amount information

21C

4C

2C

401C

5C 57

weather data

41C

corresponding
data

~417

122C~ first learning
result data

second learning
result data

~123C

# FIG. 16

6C

learning device

| learning data acquisition unit | ∼611C | | learning processing unit | ∼612C |

31C ∼          data set          ∼32C ⌐ ∼3C

| weather data | | power generation amount information |

317                              327

81C                              820C

output value

82C

| 122C ∼ first learning result data | | second learning result data | ∼123C |

output value

FIG. 17

start

S301 — acquire input data

S302 — perform calculation processing of neural network

S303 — acquire driving state information

S304 — perform calculation processing of autoencoder

S305 — perform evaluation of inference result based on output of autoencoder

S306 — Whether valid output is obtained?

No → S308 issue warning → S309 transmit input data as unknown training data

Yes → S307 Is it state suitable for driving?

No → S310 issue warning

Yes

end

FIG. 18

## INTERNATIONAL SEARCH REPORT

| International application No. |
| --- |
| PCT/JP2019/001919 |

**A. CLASSIFICATION OF SUBJECT MATTER**
Int.Cl.    G06N20/00(2019.01)i,    G06N3/08(2006.01)i,    G06T7/00(2017.01)i,
              G06T7/20(2017.01)i, G08G1/16(2006.01)i

According to International Patent Classification (IPC) or to both national classification and IPC

**B. FIELDS SEARCHED**

Minimum documentation searched (classification system followed by classification symbols)
Int.Cl.    G06N3/00-99/00, G06T7/00, G06T7/20, G08G1/16

Documentation searched other than minimum documentation to the extent that such documents are included in the fields searched
| | |
| --- | --- |
| Published examined utility model applications of Japan | 1922–1996 |
| Published unexamined utility model applications of Japan | 1971–2019 |
| Registered utility model specifications of Japan | 1996–2019 |
| Published registered utility model applications of Japan | 1994–2019 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
| --- | --- | --- |
| X | WO 2016/132468 A1 (HITACHI, LTD.) 25 August 2016, abstract, claim 8, paragraphs [0008]-[0012], | 1-5, 8-11, 13-14 |
| Y | [0027]-[0045], fig. 7, 11 (Family: none) | 6-7, 12 |
| Y | WO 2014/125757 A1 (DENSO CORP.) 21 August 2014, paragraphs [0037]-[0045], fig. 4 & US 2016/0003630 A1, paragraphs [0043]-[0051], fig. 4 & JP 2014-157395 A | 6, 12 |
| Y | JP 2016-48179 A (OMRON AUTOMOTIVE ELECTRONICS CO., LTD.) 07 April 2016, paragraphs [0033]-[0034], [0057]-[0066] (Family: none) | 6, 12 |
| Y | JP 6264492 B1 (OMRON CORP.) 24 January 2018, paragraphs [0040]-[0043] & WO 2018/167991 A1 | 7 |

☐ Further documents are listed in the continuation of Box C.        ☐ See patent family annex.

| * Special categories of cited documents: | "T" later document published after the international filing date or priority date and not in conflict with the application but cited to understand the principle or theory underlying the invention |
| --- | --- |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| 10 April 2019 (10.04.2019) | 23 April 2019 (23.04.2019) |

| Name and mailing address of the ISA/ | Authorized officer |
| --- | --- |
| Japan Patent Office<br>3-4-3, Kasumigaseki, Chiyoda-ku,<br>Tokyo 100-8915, Japan | |
| | Telephone No. |

Form PCT/ISA/210 (second sheet) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 5225163 A

**Non-patent literature cited in the description**

- **S. HOCHREITER ; J. SCHMIDHUBER.** Long short-term memory. *Neural Computation,* 15 November 1997, vol. 9 (8), 1735-1780

- **FELIX A. GERS ; JURGEN SCHMIDHUBER ; FRED CUMMINS.** Learning to Forget: Continual Prediction with LSTM. *Neural Computation,* October 2000, 2451-2471